# EUROPEAN PATENT APPLICATION

(11) **EP 4 351 172 A1**
(43) Date of publication of application: **10.04.2024**
(21) Application number: 22848318.6
(22) Date of filing: 18.07.2022
(51) Int. Cl.: H04S 7/00

(54) **CHANNEL CONFIGURATION METHOD, ELECTRONIC DEVICE, AND SYSTEM**

(30) Priority: 29.07.2021 CN 202110865810
(71) Applicant: Huawei Technologies Co., Ltd., Longgang Shenzhen, Guangdong 518129 (CN)
(72) Inventor: LI, Zhuang, Shenzhen, Guangdong 518129 (CN)
(74) Representative: Körber, Martin Hans
(86) International application number: PCT/CN2022/106261
(87) International publication number: WO 2023/005713

(57) **Abstract**

Embodiments of this application provide a sound channel configuration method, an electronic device, and a system, and relate to the field of terminal technologies. According to the technical solutions provided in embodiments of this application, a first electronic device whose sound channel is to be configured can adaptively perform sound channel configuration based on a sound intensity of a collected first sound and a second sound intensity reported by a second electronic device, thereby simplifying user operations and improving user experience. The method includes: The first electronic device whose sound channel is to be configured detects a sound channel configuration operation of a user, collects a sound, determines a first sound intensity of the first sound, and then determines, based on the first sound intensity, a target sound channel in to-be-configured sound channels; and the first electronic device receives at least one second sound intensity sent by one or more second electronic devices, determines a target device in the second electronic devices based on the second sound intensity, and matches the determined target sound channel with the target device to complete sound channel configuration.

## Description

This application claims priority to Chinese Patent Application No. 202110865810.3, filed with the China National Intellectual Property Administration on July 29, 2021 and entitled "SOUND CHANNEL CONFIGURATION METHOD, ELECTRONIC DEVICE, AND SYSTEM", which is incorporated herein by reference in its entirety.

### TECHNICAL FIELD

Embodiments of this application relate to the field of terminal technologies, and in particular, to a sound channel configuration method, an electronic device, and a system.

### BACKGROUND

With the development of terminal technologies, wireless sound boxes are increasingly popular. An electronic device (like a smart screen or a television) can be connected to one or more sound boxes, and different sound boxes play sounds of different sound channels, to achieve a better sound playing effect. For example, in a sound box system including two sound boxes, one sound box is configured to play audio of a left sound channel of the electronic device, and the other sound box is configured to play audio of a right sound channel of the electronic device, to provide more stereo sound experience for a user.

In a process of establishing a connection between an electronic device and a sound box, a sound channel corresponding to the sound box needs to be configured to complete sound channel configuration, to establish a sound box system of the electronic device. Currently, in a sound channel configuration process, a user needs to manually perform a plurality of operations on the electronic device to provide each sound box with a corresponding sound channel by using a sound box name. However, the user usually cannot determine an actual sound box specifically corresponding to a sound box name displayed on the electronic device. Therefore, the user needs to reconfirm a sound box name recorded on the sound box or in a sound box specification, and perform sound channel configuration after comparison. This is a cumbersome operation process and affects user experience.

### SUMMARY

To resolve the foregoing technical problem, embodiments of this application provide a sound channel configuration method, an electronic device, and a system. According to the technical solutions provided in embodiments of this application, a first electronic device whose sound channel is to be configured can adaptively perform sound channel configuration based on a sound intensity of a collected first sound and a second sound intensity reported by a second electronic device, thereby simplifying user operations and improving user experience.

To achieve the foregoing technical objective, embodiments of this application provide the following technical solutions.

According to a first aspect, a sound channel configuration method is provided, and is applied to a first electronic device. The method includes: receiving a first operation of a user, where the first operation is used to trigger the first electronic device to perform sound channel configuration; determining a first sound intensity of a first sound based on a sound collected by a first sound collection apparatus of the first electronic device; determining, based on the first sound intensity, a target sound channel in to-be-configured sound channels of the first electronic device; receiving at least one second sound intensity sent by one or more second electronic devices; determining a target device in the second electronic devices based on the at least one second sound intensity; and matching the target sound channel with the target device.

The first operation is, for example, a sound channel configuration operation. The sound channel configuration operation includes, for example, a touch operation (for example, an operation of tapping a control for confirming to start the sound channel configuration) of the user on a display of the first electronic device, a voice operation indicating the sound channel configuration, an operation of inputting a sound channel configuration command by using a physical button on the first electronic device, and an operation of inputting the sound channel configuration command by using a remote control.

In this way, the first electronic device may automatically complete sound channel configuration in response to the sound channel configuration operation of the user. In a sound channel configuration process, the user only needs to complete a simple operation of generating the first sound, does not need to confirm a name of the second electronic device (for example, a wireless sound box), and does not need to perform more operations on the display of the first electronic device. In this way, user operations in the sound channel configuration process are effectively simplified, and user experience is improved.

According to the first aspect, the determining a first sound intensity of a first sound based on a sound collected by a first sound collection apparatus of the first electronic device includes: if a sound feature of the sound collected by the first sound collection apparatus of the first electronic device meets a preset condition, determining that the collected sound is the first sound, and determining the first sound intensity of the first sound, where the sound feature includes one or more of a frequency feature, an amplitude feature, a waveform feature, and a duration feature.

For example, a sound frequency of tapping a sound box by a human knuckle is generally 800 Hz to 1200 Hz. In a sound pickup process, the first electronic device picks up a sound in the frequency range, and obtains a corresponding sound intensity. Further, optionally, the first electronic device may determine whether a feature of the picked-up sound in the frequency range matches a feature (for example, a sound waveform has one or more peaks) of a sound emitted by tapping a sound box by using the human knuckle. If the two features match, the first electronic device determines that the picked-up sound in the frequency range is the sound emitted by tapping the sound box by using the human knuckle, and determines that the sound is indeed a sound generated when the user wants to perform sound channel configuration on the first electronic device and taps the sound box by using the knuckle, and is not an interference sound like a human sound, music, or environmental background noise.

In this way, the first electronic device determines the first sound by using the sound feature, and then performs sound channel configuration by using the first sound, to avoid interference caused to the sound channel configuration process when another sound is collected.

According to the first aspect or any one of the foregoing implementations of the first aspect, the first sound collection apparatus includes M microphones, where M is a positive integer greater than or equal to two. In a case in which the to-be-configured sound channels include a first sound channel and a second sound channel, and the first sound channel or the second sound channel is a left sound channel or a right sound channel, a quantity of the first sounds is two, the target device includes a first target device and a second target device, and the first target device or the second target device is located on a left side of the first electronic device or located on a right side of the first electronic device. The determining, based on the first sound intensity, a target sound channel in to-be-configured sound channels of the first electronic device includes: determining, based on first sound intensities of first sounds collected by the M microphones for a first time, that the to-be-configured sound channel is the first sound channel. The determining a target device in the second electronic devices based on the at least one second sound intensity includes: determining a first target device in the second electronic devices based on at least one second sound intensity received for a first time. The matching the target sound channel with the target device includes: matching the first sound channel with the first target device. The determining, based on the first sound intensity, a target sound channel in to-be-configured sound channels of the first electronic device includes: determining, based on first sound intensities of first sounds collected by the M microphones for a second time, that the to-be-configured sound channel is the second sound channel. The determining a target device in the second electronic devices based on the at least one second sound intensity includes: determining a second target device in the second electronic devices based on at least one second sound intensity received for a second time. The matching the target sound channel with the target device includes: matching the second sound channel with the second target device.

According to the first aspect or any one of the foregoing implementations of the first aspect, the to-be-configured sound channels of the first electronic device include the left sound channel and the right sound channel; and the determining, based on the first sound intensity, a target sound channel in to-be-configured sound channels of the first electronic device includes: if it is determined, based on the first sound intensity, that the first sound comes from the left side or the right side of the first electronic device, determining that the target sound channel is the left sound channel or the right sound channel. The determining a target device in the second electronic devices based on the at least one second sound intensity includes: determining, as the target device, a second electronic device corresponding to a larger second sound intensity in the at least one second sound intensity.

For example, it is assumed that the to-be-configured sound channels of the first electronic device include the left sound channel and the right sound channel, a sound box A is located on the left side of the first electronic device, and a sound box B is located on the right side of the first electronic device. In this case, the sound channel configuration process may include the following steps: The user taps the sound box A by using the knuckle, and the first electronic device collects a tapping sound by using the microphone, to determine the first sound intensity. It is determined, based on the first sound intensity, that a current sound-emitting position is located on the left side of the first electronic device, and a correspondence should be established between a second electronic device at the position and the left sound channel. Then, the first electronic device needs to determine which second electronic device of the sound box A and the sound box B is the second electronic device at the current sound-emitting position. In other words, the sound box A or the sound box B is the first target device or the second target device.

Correspondingly, in a process in which the user taps the sound box A by using the knuckle, the sound box A and the sound box B can also collect the tapping sound by using microphones included in the sound box A and the sound box B. It may be understood that the sound box A is the second electronic device at the sound-emitting position, and the sound box A is closer to the sound-emitting position than the sound box B. Therefore, a sound intensity of the tapping sound collected by the sound box A should be greater than a sound intensity of the tapping sound collected by the sound box B. The sound box A and the sound box B send the sound intensities of the tapping sound collected by the sound box A and the sound box B to the first electronic device, and the first electronic device obtains second sound intensities of the tapping sound collected by the second electronic devices. Therefore, the first electronic device can determine, based on the second sound intensities, whether a to-be-paired second electronic device is specifically the sound box A or the sound box B. For example, if the first electronic device determines that the sound intensity of the tapping sound collected by the sound box A is large, the first electronic device determines that the second electronic device at the current sound-emitting position is the sound box A. Therefore, the first electronic device establishes the correspondence between the sound box A and the left sound channel, to complete left sound channel configuration.

Then, the user may further tap the sound box B by using the knuckle, and the first electronic device and the second electronic devices repeat the foregoing steps, so that the first electronic device can automatically complete right sound channel configuration based on a sound intensity of the tapping sound received by the microphone of the first electronic device and sound intensities that are of the tapping sound received by the second electronic devices and that are sent by the second electronic devices and received by the first electronic device.

In this way, the user can complete sound channel configuration on the first electronic device by using only a simple tapping operation. Operation steps are simple, sound channel configuration efficiency is high, and user experience can be effectively improved.

According to the first aspect or any one of the foregoing implementations of the first aspect, the first sound collection apparatus includes M microphones, where M is a positive integer greater than or equal to two. When a quantity of the to-be-configured sound channels is greater than two, the determining, based on the first sound intensity, a target sound channel in the to-be-configured sound channels of the first electronic device includes: determining, based on a first quantity of the first sound intensities in the first sound intensities, a second quantity of the target sound channels in the to-be-configured sound channels of the first electronic device, where the first quantity is M times the second quantity. The determining a target device in the second electronic devices based on the at least one second sound intensity includes: determining, based on a second sound intensity corresponding to the first quantity of the first sound intensities, a second quantity of the target devices in the second electronic device. The matching the target sound channel with the target device includes: determining, based on the first quantity of the first sound intensities, a correspondence between the second quantity of the target sound channels and the second quantity of the target devices; and matching the second quantity of the target sound channels with the second quantity of the target devices based on the correspondence.

According to the first aspect or any one of the foregoing implementations of the first aspect, the to-be-configured sound channels of the first electronic device include a left front sound channel, a left rear sound channel, a right-sound-channel front sound channel, and a right rear sound channel; and there are a plurality of first sounds. The determining, based on the first sound intensity, a target sound channel in to-be-configured sound channels of the first electronic device includes: if it is determined, based on the first sound intensity, that the first sound comes from a left side of the first electronic device, determining that the target sound channel is the left front sound channel or the left rear sound channel; or if it is determined, based on the first sound intensity, that the first sound comes from a right side of the first electronic device, determining that the target sound channel is the right-sound-channel front sound channel or the right rear sound channel. The determining a target device in the second electronic devices based on the at least one second sound intensity includes: determining, for each first sound, a second electronic device corresponding to a larger second sound intensity in second sound intensities corresponding to each first sound as a candidate target device, where a quantity of candidate target devices is equal to a quantity of the first sounds; for first sound intensities corresponding to a same sound collection apparatus in first sound intensities that correspond to the first sounds from the left side of the first electronic device, determining a candidate target device corresponding to a larger first sound intensity as a target device corresponding to the left front sound channel, and determining a candidate target device corresponding to a smaller first sound intensity as a target device corresponding to the left rear sound channel; and for first sound intensities corresponding to a same sound collection apparatus in first sound intensities that correspond to the first sounds from the right side of the first electronic device, determining a candidate target device corresponding to a larger first sound intensity as a target device corresponding to the right front sound channel, and determining a candidate target device corresponding to a smaller first sound intensity as a target device corresponding to the right rear sound channel.

In some embodiments, if the quantity of the to-be-configured channels of the first electronic device is greater than two, in a sound box system in which there are two or more second electronic devices in each direction of corresponding directions on two sides of a central axis of the first electronic device, because the microphone of the first electronic device is generally located at corresponding positions on the two sides of the central axis of the first electronic device or located at corresponding positions on the central axis, the first electronic device cannot directly determine the to-be-configured sound channel based on the first sound intensity collected by the microphone at one time, and needs to wait until collection of some or all of the first sound intensities is completed, so that the to-be-configured sound channel can be determined. The some of the first sound intensities include all first sound intensities corresponding to a one-side direction of the central axis of the first electronic device.

For example, the first electronic device is a four-channel surround device, that is, the first electronic device may output four-channel audio, and needs to establish a pairing relationship with four second electronic devices. However, the first electronic device is configured with only two microphones, and the first electronic device cannot distinguish between the left front sound channel and the left rear sound channel or distinguish between the right front sound channel and the right rear sound channel based on first sound intensities collected by the two microphones at one time. Therefore, the first electronic device can further confirm the to-be-configured sound channels only after obtaining all first sound intensities corresponding to the left side of the first electronic device, or all first sound intensities corresponding to the right side of the first electronic device, or all first sound intensities.

In this way, in a multi-channel scenario in which a quantity of the to-be-configured sound channels is greater than two, the user may also complete sound channel configuration on the first electronic device by using a simple tapping operation. Operation steps are simple, sound channel configuration efficiency is high, and user experience can be effectively improved.

According to the first aspect or any one of the foregoing implementations of the first aspect, a sound-emitting position of the first sound includes a first position of the target device or a second position near the target device.

In some embodiments, the first sound intensity includes, for example, a sound intensity of a sound that corresponds to a position of the second electronic device and that is collected by the first electronic device by using a microphone of the first electronic device. A sound corresponding to the position of the wireless sound box may further include a sound generated at or near the position of the wireless sound box, for example, a sound generated when the user beats the wireless sound box, a sound generated when the user makes a finger, claps, or coughs near the wireless sound box, and audio played by the wireless sound box. A position near the second electronic device indicates that a sound generating position is near the position of the second electronic device, for example, a distance between the sound generating position and the position of the second electronic device is less than or equal to a preset threshold. For example, the user may tap the sound box A by using the knuckle, or may make a sound at a position near the sound box A and away from another sound box.

In this way, a sound is generated at the position of the wireless sound box or at a position near the position of the wireless sound box, so that a sound intensity of the sound collected by the wireless sound box is largest, and the wireless sound box is positioned by using the sound intensity of the sound.

According to the first aspect or any one of the foregoing implementations of the first aspect, after the receiving a first operation of a user, the method further includes: obtaining a first Bluetooth name of the second electronic device; and the receiving at least one second sound intensity sent by one or more second electronic devices includes: obtaining a second Bluetooth name of the second electronic device; and determining the at least one second sound intensity based on a newly-added suffix of the second Bluetooth name compared with the first Bluetooth name.

In some embodiments, after enabling a Bluetooth function, the first electronic device can scan for a nearby device that has enabled Bluetooth and is in a to-be-paired state, and obtain a Bluetooth ID of the device. For example, in a Bluetooth scanning process, the first electronic device can obtain a Bluetooth ID list that includes a Bluetooth ID of the second electronic device.

In some embodiments, after the second electronic device edits the Bluetooth ID based on the second sound intensity, in a process of scanning for the nearby device that has enabled Bluetooth and is in the to-be-paired state, the first electronic device can obtain a Bluetooth ID edited by the second electronic device. In other words, the second electronic device sends the edited Bluetooth ID to the first electronic device, so that the first electronic device determines the second sound intensity based on a second Bluetooth ID. In this case, in the Bluetooth scanning process, if the first electronic device finds that some or all Bluetooth ID suffixes in the Bluetooth ID list obtained through scanning change, the first electronic device determines a Bluetooth device whose Bluetooth ID suffix changes as a to-be-paired second electronic device, and obtains a corresponding second sound intensity. The change of the Bluetooth ID suffix includes, for example, a newly-added suffix of the changed Bluetooth ID compared with an original Bluetooth ID. For example, the original Bluetooth ID does not have a suffix, and a suffix is added to the changed Bluetooth ID compared with the original Bluetooth ID; or the original Bluetooth ID has a suffix, and another suffix is added to the changed Bluetooth ID compared with the original Bluetooth ID. A large-screen device determines a corresponding device identity based on a part of the Bluetooth ID that does not change (that is, determines that the device and a device corresponding to the Bluetooth ID that has a newly-added suffix part are a same device), and determines that the second sound intensity is a newly-added suffix part of the Bluetooth ID.

For example, it is assumed that an original Bluetooth ID (that is, a Bluetooth ID before the sound box A determines the second sound intensity) of the sound box A is XXX, and an original Bluetooth ID (that is, a Bluetooth ID before the sound box B determines the second sound intensity) of the sound box B is XXXX. In the Bluetooth scanning process, the first electronic device determines that a suffix is added to the Bluetooth ID of the sound box A, where the Bluetooth ID of the sound box A changes from XXX to XXX-120, and a suffix 120 is added, and therefore determines that the sound intensity collected by the sound box A is 120 dB; and determines that a suffix is added to the Bluetooth ID of the sound box B, where the Bluetooth ID of the sound box B changes from XXXX to XXXX-60, and a suffix 60 is added, and therefore determines that the sound intensity collected by the sound box B is 60 dB.

In this way, the first electronic device may determine the second sound intensity by simply comparing a change between a first Bluetooth ID and a second Bluetooth ID, thereby simplifying a process of determining the sound intensity.

According to the first aspect or any one of the foregoing implementations of the first aspect, the receiving at least one second sound intensity sent by one or more second electronic devices includes: obtaining second Bluetooth names of the one or more second electronic devices, where the second Bluetooth names include at least one piece of second sound intensity information, and the at least one piece of second sound intensity information indicates the at least one second sound intensity; and determining the at least one second sound intensity based on the second Bluetooth names.

In some embodiments, the second electronic device edits the Bluetooth ID based on a preset rule, and adds second sound intensity information to the Bluetooth ID. In this case, in a process of scanning a to-be-paired device, the first electronic device can determine an edited Bluetooth ID that meets the preset rule. Then, the first electronic device parses the edited Bluetooth ID based on the preset rule, and can obtain the second sound intensity (for example, obtain the second sound intensity from a preset field).

According to the first aspect or any one of the foregoing implementations of the first aspect, the first sound is generated by a second operation of the user, and the second operation includes one or more of the following content: an operation of tapping the target device by using the knuckle of the user, and an operation of making a sound by the user at or near the target device; or the first sound is generated by the target device by playing audio.

According to the first aspect or any one of the foregoing implementations of the first aspect, in a case in which the first sound is generated by the second operation of the user, the method further includes: prompting the user to perform the second operation.

In some embodiments, after detecting the sound channel configuration operation of the user, the first electronic device may further display operation guide information to guide the user to separately tap each to-be-paired second electronic device. The operation guide information may include a text, a picture, an animation, and/or a video.

In this way, the user can easily understand a sound channel configuration process, and avoid a sound channel configuration failure caused by an operation error.

According to the first aspect or any one of the foregoing implementations of the first aspect, the method further includes: prompting the user that the sound channel configuration is completed.

In some implementations, after determining that the sound channel configuration is completed, the first electronic device may further display prompt information or play a voice prompt, to prompt the user that the sound channel configuration is completed for use. Alternatively, each time a sound channel is configured, the first electronic device displays prompt information once or plays a voice prompt, to present the sound channel configuration process to the user.

In this way, the user can determine, based on the prompt, that the sound channel configuration is completed, and may start to play a sound, thereby improving user interaction and improving user experience.

In some embodiments, after completing sound channel configuration, the first electronic device may invoke an audio management module to identify a sound channel that is configured, where an identifier indicates a correspondence between the sound channel and the second electronic device. Then, in a sound playing process, the audio management module may send, based on the identifier, one-source audio of different channels to a corresponding second electronic device for playing. An audio file to be played by the first electronic device should include multi-source audio, where each piece of one-source audio corresponds to one sound channel, and the first electronic device plays corresponding one-source audio by using different sound channels, so that a stereo sound effect can be implemented.

According to a second aspect, a sound channel configuration method is provided, and is applied to a second electronic device. The method includes: determining a second sound intensity of a first sound based on a sound collected by a second sound collection apparatus of the second electronic device; sending the second sound intensity to a first electronic device; and receiving an audio file sent by the first electronic device, where the audio file is sent by the first electronic device after the first electronic device determines, based on a first sound intensity and the second sound intensity, a target sound channel that matches the second electronic device, the audio file corresponds to the target sound channel, the first sound intensity is a sound intensity that is of the first sound and that is determined by the first electronic device, and the target sound channel is a sound channel in to-be-configured sound channels of the first electronic device; and playing audio based on the audio file.

In some embodiments, if the second electronic device does not establish a pairing connection to another electronic device, the second electronic device is in an unpaired state. When the second electronic device is in the unpaired state, if it is determined that a sound feature of a collected sound meets a preset condition, that the collected sound is a sound used for pairing is determined. In this case, the second electronic device determines a second sound intensity of the sound, and edits, by using the second sound intensity, a Bluetooth ID used for pairing.

According to the second aspect, the determining a second sound intensity of a first sound based on a sound collected by a second sound collection apparatus of the second electronic device includes: if a sound feature of the sound collected by the second sound collection apparatus of the second electronic device meets a preset condition, determining that the collected sound is the first sound, and determining the second sound intensity of the first sound, where the sound feature includes one or more of a frequency feature, an amplitude feature, a waveform feature, and a duration feature.

In this way, the second electronic device determines the first sound by using the sound feature, and then sends a sound intensity of the first sound to the first electronic device, so that the first electronic device performs sound channel configuration by using the first sound, to avoid interference caused to a sound channel configuration process when another sound is collected.

According to the second aspect or any one of the implementations of the second aspect, before the sending the second sound intensity to a first electronic device, the method further includes: sending a first Bluetooth name of the second electronic device to the first electronic device. The sending the second sound intensity to a first electronic device includes: sending a second Bluetooth name of the second electronic device to the first electronic device, where the second Bluetooth name is a Bluetooth name obtained after the first Bluetooth name is edited based on the second sound intensity.

According to the second aspect or any one of the implementations of the second aspect, the sending the second sound intensity to a first electronic device includes: sending a second Bluetooth name including second sound intensity information to the first electronic device, where the second sound intensity information indicates the second sound intensity.

According to the second aspect or any one of the foregoing implementations of the second aspect, the first sound is generated by a second operation of a user, and the second operation includes one or more of the following content: an operation of tapping the second electronic device by using a knuckle of the user, and an operation of making a sound by the user at or near the second electronic device; or the first sound is generated by the second electronic device by playing audio.

For technical effects corresponding to the second aspect or any one of the implementations of the second aspect, refer to technical effects corresponding to any one of the first aspect or the implementations of the first aspect. Details are not described herein again.

According to a third aspect, a first electronic device is provided. The first electronic device includes a processor and a memory, where the memory is coupled to the processor, the memory is configured to store computer program code, the computer program code includes computer instructions. When the processor reads the computer instructions from the memory, the first electronic device is enabled to perform the following operations: receiving a first operation of a user, where the first operation is used to trigger the first electronic device to perform sound channel configuration; determining a first sound intensity of a first sound based on a sound collected by a first sound collection apparatus of the first electronic device; determining, based on the first sound intensity, a target sound channel in to - be-configured sound channels of the first electronic device; receiving at least one second sound intensity sent by one or more second electronic devices; determining a target device in the second electronic devices based on the at least one second sound intensity; and matching the target sound channel with the target device.

According to the third aspect, the determining a first sound intensity of a first sound based on a sound collected by a first sound collection apparatus of the first electronic device includes: if a sound feature of the sound collected by the first sound collection apparatus of the first electronic device meets a preset condition, determining that the collected sound is the first sound, and determining the first sound intensity of the first sound, where the sound feature includes one or more of a frequency feature, an amplitude feature, a waveform feature, and a duration feature.

According to the third aspect or any one of the foregoing implementations of the third aspect, the first sound collection apparatus includes M microphones, where M is a positive integer greater than or equal to two. In a case in which the to-be-configured sound channels include a first sound channel and a second sound channel, and the first sound channel or the second sound channel is a left sound channel or a right sound channel, a quantity of the first sounds is two, the target device includes a first target device and a second target device, and the first target device or the second target device is located on a left side of the first electronic device or located on a right side of the first electronic device. The determining, based on the first sound intensity, a target sound channel in to-be-configured sound channels of the first electronic device includes: determining, based on first sound intensities of first sounds collected by the M microphones for a first time, that the to-be-configured sound channel is the first sound channel. The determining a target device in the second electronic devices based on the at least one second sound intensity includes: determining a first target device in the second electronic devices based on at least one second sound intensity received for a first time. The matching the target sound channel with the target device includes: matching the first sound channel with the first target device. The determining, based on the first sound intensity, a target sound channel in to-be-configured sound channels of the first electronic device includes: determining, based on first sound intensities of first sounds collected by the M microphones for a second time, that the to-be-configured sound channel is the second sound channel. The determining a target device in the second electronic devices based on the at least one second sound intensity includes: determining a second target device in the second electronic devices based on at least one second sound intensity received for a second time. The matching the target sound channel with the target device includes: matching the second sound channel with the second target device.

According to the third aspect or any one of the foregoing implementations of the third aspect, the to-be-configured sound channels of the first electronic device include the left sound channel and the right sound channel; and the determining, based on the first sound intensity, a target sound channel in to-be-configured sound channels of the first electronic device includes: if it is determined, based on the first sound intensity, that the first sound comes from the left side or the right side of the first electronic device, determining that the target sound channel is the left sound channel or the right sound channel. The determining a target device in the second electronic devices based on the at least one second sound intensity includes: determining, as the target device, a second electronic device corresponding to a larger second sound intensity in the at least one second sound intensity.

According to the third aspect or any one of the foregoing implementations of the third aspect, the first sound collection apparatus includes M microphones, where M is a positive integer greater than or equal to two. When a quantity of the to-be-configured sound channels is greater than two, the determining, based on the first sound intensity, a target sound channel in the to-be-configured sound channels of the first electronic device includes: determining, based on a first quantity of the first sound intensities in the first sound intensities, a second quantity of the target sound channels in the to-be-configured sound channels of the first electronic device, where the first quantity is M times the second quantity. The determining a target device in the second electronic devices based on the at least one second sound intensity includes: determining, based on a second sound intensity corresponding to the first quantity of the first sound intensities, a second quantity of the target devices in the second electronic device. The matching the target sound channel with the target device includes: determining, based on the first quantity of the first sound intensities, a correspondence between the second quantity of the target sound channels and the second quantity of the target devices; and matching the second quantity of the target sound channels with the second quantity of the target devices based on the correspondence.

According to the third aspect or any one of the foregoing implementations of the third aspect, the to-be-configured sound channels of the first electronic device include a left front sound channel, a left rear sound channel, a right-sound-channel front sound channel, and a right rear sound channel; and there are a plurality of first sounds. The determining, based on the first sound intensity, a target sound channel in to-be-configured sound channels of the first electronic device includes: if it is determined, based on the first sound intensity, that the first sound comes from a left side of the first electronic device, determining that the target sound channel is the left front sound channel or the left rear sound channel; or if it is determined, based on the first sound intensity, that the first sound comes from a right side of the first electronic device, determining that the target sound channel is the right-sound-channel front sound channel or the right rear sound channel. The determining a target device in the second electronic devices based on the at least one second sound intensity includes: determining, for each first sound, a second electronic device corresponding to a larger second sound intensity in second sound intensities corresponding to each first sound as a candidate target device, where a quantity of candidate target devices is equal to a quantity of the first sounds; for first sound intensities corresponding to a same sound collection apparatus in first sound intensities that correspond to the first sounds from the left side of the first electronic device, determining a candidate target device corresponding to a larger first sound intensity as a target device corresponding to the left front sound channel, and determining a candidate target device corresponding to a smaller first sound intensity as a target device corresponding to the left rear sound channel; and for first sound intensities corresponding to a same sound collection apparatus in first sound intensities that correspond to the first sounds from the right side of the first electronic device, determining a candidate target device corresponding to a larger first sound intensity as a target device corresponding to the right front sound channel, and determining a candidate target device corresponding to a smaller first sound intensity as a target device corresponding to the right rear sound channel.

According to the third aspect or any one of the foregoing implementations of the third aspect, a sound-emitting position of the first sound includes a first position of the target device or a second position near the target device.

According to the third aspect or any one of the foregoing implementations of the third aspect, when the processor reads the computer instructions from the memory, the first electronic device is further enabled to perform the following operations: obtaining a first Bluetooth name of the second electronic device; and the receiving at least one second sound intensity sent by one or more second electronic devices includes: obtaining a second Bluetooth name of the second electronic device; and determining the at least one second sound intensity based on a newly-added suffix of the second Bluetooth name compared with the first Bluetooth name.

According to the third aspect or any one of the foregoing implementations of the third aspect, the receiving at least one second sound intensity sent by one or more second electronic devices includes: obtaining second Bluetooth names of the one or more second electronic devices, where the second Bluetooth names include at least one piece of second sound intensity information, and the at least one piece of second sound intensity information indicates the at least one second sound intensity; and determining the at least one second sound intensity based on the second Bluetooth names.

According to the third aspect or any one of the foregoing implementations of the third aspect, the first sound is generated by a second operation of the user, and the second operation includes one or more of the following content: an operation of tapping the target device by using a knuckle of a user, and an operation of making a sound by the user at or near the target device; or the first sound is generated by the target device by playing audio.

According to the third aspect or any one of the foregoing implementations of the third aspect, in a case in which the first sound is generated by the second operation of the user, when the processor reads the computer instructions from the memory, the first electronic device is further enabled to perform the following operation: prompting the user to perform the second operation.

According to the third aspect or any one of the foregoing implementations of the third aspect, when the processor reads the computer instructions from the memory, the first electronic device is further enabled to perform the following operation: prompting the user that the sound channel configuration is completed.

For technical effects corresponding to the third aspect or any one of the implementations of the third aspect, refer to technical effects corresponding to any one of the first aspect or the implementations of the first aspect. Details are not described herein again.

According to a fourth aspect, an electronic device is provided. The electronic device includes a processor and a memory, where the memory is coupled to the processor, the memory is configured to store computer program code, the computer program code includes computer instructions. When the processor reads the computer instructions from the memory, a first electronic device is enabled to perform the following operations: determining a second sound intensity of a first sound based on a sound collected by a second sound collection apparatus of a second electronic device; sending the second sound intensity to the first electronic device; and receiving an audio file sent by the first electronic device, where the audio file is sent by the first electronic device after the first electronic device determines, based on a first sound intensity and the second sound intensity, a target sound channel that matches the second electronic device, the audio file corresponds to the target sound channel, the first sound intensity is a sound intensity that is of the first sound and that is determined by the first electronic device, and the target sound channel is a sound channel in to-be-configured sound channels of the first electronic device; and playing audio based on the audio file.

According to the fourth aspect, the determining a second sound intensity of a first sound based on a sound collected by a second sound collection apparatus of the second electronic device includes: if a sound feature of the sound collected by the second sound collection apparatus of the second electronic device meets a preset condition, determining that the collected sound is the first sound, and determining the second sound intensity of the first sound, where the sound feature includes one or more of a frequency feature, an amplitude feature, a waveform feature, and a duration feature.

According to the fourth aspect or any one of the foregoing implementations of the fourth aspect, when the processor reads the computer instructions from the memory, the second electronic device is further enabled to perform the following operation: sending a first Bluetooth name of the second electronic device to the first electronic device. The sending the second sound intensity to a first electronic device includes: sending a second Bluetooth name of the second electronic device to the first electronic device, where the second Bluetooth name is a Bluetooth name obtained after the first Bluetooth name is edited based on the second sound intensity.

According to the fourth aspect or any one of the implementations of the fourth aspect, the sending the second sound intensity to a first electronic device includes: sending a second Bluetooth name including second sound intensity information to the first electronic device, where the second sound intensity information indicates the second sound intensity.

According to the fourth aspect or any one of the foregoing implementations of the fourth aspect, the first sound is generated by a second operation of a user, and the second operation includes one or more of the following content: an operation of tapping the second electronic device by using a knuckle of the user, and an operation of making a sound by the user at or near the second electronic device; or the first sound is generated by the second electronic device by playing audio.

For technical effects corresponding to the fourth aspect or any one of the implementations of the fourth aspect, refer to technical effects corresponding to any one of the first aspect or the implementations of the first aspect. Details are not described herein again.

According to a fifth aspect, an embodiment of this application provides an electronic device. The electronic device has a function of implementing the sound channel configuration method according to the first aspect and any one of the possible implementations of the first aspect, or has a function of implementing the sound channel configuration method according to the second aspect and any one of the possible implementations of the second aspect. The function may be implemented by hardware, or may be implemented by hardware executing corresponding software. The hardware or the software includes one or more modules corresponding to the function.

For technical effects corresponding to the fifth aspect or any one of the implementations of the fifth aspect, refer to technical effects corresponding to any one of the first aspect or the implementations of the first aspect. Details are not described herein again.

According to a sixth aspect, a sound channel configuration system is provided. The system includes a first electronic device and one or more second electronic devices. The first electronic device is configured to: receive a first operation of a user; determine a first sound intensity of a first sound based on a sound collected by a first sound collection apparatus of the first electronic device; and determine, based on the first sound intensity, a target sound channel in to-be-configured sound channels of the first electronic device, where the first operation is used to trigger the first electronic device to perform sound channel configuration. The second electronic device is configured to: determine a second sound intensity of the first sound based on a sound collected by a second sound collection apparatus of the second electronic device; and send the second sound intensity to the first electronic device. The first electronic device is further configured to: receive at least one second sound intensity sent by the one or more second electronic devices; determine a target device in the one or more second electronic devices based on the at least one second sound intensity; and match the target sound channel with the target device.

According to the sixth aspect, the first electronic device is specifically configured to: if a sound feature of the sound collected by the first sound collection apparatus of the first electronic device meets a preset condition, determine that the collected sound is the first sound, and determine the first sound intensity of the first sound, where the sound feature includes one or more of a frequency feature, an amplitude feature, a waveform feature, and a duration feature.

According to the sixth aspect or any one of the implementations of the sixth aspect, the second electronic device is specifically configured to: if a sound feature of the sound collected based on the second sound collection apparatus of the second electronic device meets the preset condition, determine that the collected sound is the first sound, and determine the second sound intensity of the first sound, where the sound feature includes one or more of a frequency feature, an amplitude feature, a waveform feature, and a duration feature.

According to the sixth aspect or any one of the foregoing implementations of the sixth aspect, the to-be-configured sound channels of the first electronic device include a left sound channel and a right sound channel; and the first electronic device is specifically configured to: if it is determined, based on the first sound intensity, that the first sound comes from the left side or the right side of the first electronic device, determine that the target sound channel is the left sound channel or the right sound channel; and determine, as the target device, a second electronic device corresponding to a larger second sound intensity in the at least one second sound intensity.

According to the sixth aspect or any one of the foregoing implementations of the sixth aspect, the to-be-configured sound channels of the first electronic device include a left front sound channel, a left rear sound channel, a right-sound-channel front sound channel, and a right rear sound channel; and there are a plurality of first sounds. The first electronic device is specifically configured to: if it is determined, based on the first sound intensity, that the first sound comes from a left side of the first electronic device, determine that the target sound channel is the left front sound channel or the left rear sound channel; or if it is determined, based on the first sound intensity, that the first sound comes from a right side of the first electronic device, determine that the target sound channel is the right-sound-channel front sound channel or the right rear sound channel; determine, for each first sound, a second electronic device corresponding to a larger second sound intensity in second sound intensities corresponding to each first sound as a candidate target device, where a quantity of candidate target devices is equal to a quantity of the first sounds; for first sound intensities corresponding to a same sound collection apparatus in first sound intensities that correspond to the first sounds from the left side of the first electronic device, determine a candidate target device corresponding to a larger first sound intensity as a target device corresponding to the left front sound channel, and determine a candidate target device corresponding to a smaller first sound intensity as a target device corresponding to the left rear sound channel; and for first sound intensities corresponding to a same sound collection apparatus in first sound intensities that correspond to the first sounds from the right side of the first electronic device, determine a candidate target device corresponding to a larger first sound intensity as a target device corresponding to the right front sound channel, and determine a candidate target device corresponding to a smaller first sound intensity as a target device corresponding to the right rear sound channel.

According to the sixth aspect or any one of the foregoing implementations of the sixth aspect, a sound-emitting position of the first sound includes a first position of the target device or a second position near the target device.

According to the sixth aspect or any one of the implementations of the sixth aspect, the first electronic device is further configured to obtain a first Bluetooth name of the second electronic device. The first electronic device is specifically configured to: obtain a second Bluetooth name; and determine the at least one second sound intensity based on a newly-added suffix of the second Bluetooth name compared with the first Bluetooth name.

According to the sixth aspect or any one of the implementations of the sixth aspect, the first electronic device is specifically configured to: obtain second Bluetooth names of the one or more second electronic devices, where the second Bluetooth names include at least one piece of second sound intensity information, and the at least one piece of second sound intensity information indicates the at least one second sound intensity; and determine the at least one second sound intensity based on the second Bluetooth names.

According to the sixth aspect or any one of the foregoing implementations of the sixth aspect, the first sound is generated by a second operation of the user, and the second operation includes one or more of the following content: an operation of tapping the target device by using a knuckle of a user, and an operation of making a sound by the user at or near the target device; or the first sound is generated by the target device by playing audio.

According to the sixth aspect or any one of the foregoing implementations of the sixth aspect, when the first sound is generated by the second operation of the user, the first electronic device is further configured to: prompt the user to perform the second operation.

According to the sixth aspect or any one of the implementations of the sixth aspect, the first electronic device is further configured to: prompt the user that the sound channel configuration is completed.

For technical effects corresponding to the sixth aspect or any one of the implementations of the sixth aspect, refer to technical effects corresponding to any one of the first aspect or the implementations of the first aspect. Details are not described herein again.

According to a seventh aspect, a computer-readable storage medium is provided. The computer-readable storage medium stores a computer program (which may also be referred to as instructions or code). When the computer program is executed by an electronic device, the electronic device is enabled to perform the method according to the first aspect or any one of the implementations of the first aspect, or the electronic device is enabled to perform the method according to the second aspect or any one of the implementations of the second aspect.

For technical effects corresponding to the seventh aspect or any one of the implementations of the seventh aspect, refer to technical effects corresponding to any one of the first aspect or the implementations of the first aspect. Details are not described herein again.

According to an eighth aspect, an embodiment of this application provides a computer program product. When the computer program product runs on an electronic device, the electronic device is enabled to perform the method according to the first aspect or any one of the implementations of the first aspect, or the electronic device is enabled to perform the method according to the second aspect or any one of the implementations of the second aspect.

For technical effects corresponding to the eighth aspect or any one of the implementations of the eighth aspect, refer to technical effects corresponding to any one of the first aspect or the implementations of the first aspect. Details are not described herein again.

According to a ninth aspect, an embodiment of this application provides a circuit system, where the circuit system includes a processing circuit, and the processing circuit is configured to perform the method according to the first aspect or any one of the implementations of the first aspect; or the processing circuit is configured to perform the method according to the second aspect or any one of the implementations of the second aspect.

For technical effects corresponding to the ninth aspect or any one of the implementations of the ninth aspect, refer to technical effects corresponding to any one of the first aspect or the implementations of the first aspect. Details are not described herein again.

According to a tenth aspect, an embodiment of this application provides a chip system, including at least one processor and at least one interface circuit, where the at least one interface circuit is configured to perform a transceiver function and send instructions to the at least one processor, and when the at least one processor executes the instructions, the at least one processor performs the method according to the first aspect or any one of the implementations of the first aspect; or when the at least one processor executes the instructions, the at least one processor performs the method according to the second aspect or any one of the implementations of the second aspect.

For technical effects corresponding to the tenth aspect or any one of the implementations of the tenth aspect, refer to technical effects corresponding to any one of the first aspect or the implementations of the first aspect. Details are not described herein again.

### BRIEF DESCRIPTION OF DRAWINGS

FIG. 1 is a schematic diagram of a sound box system according to an embodiment of this application;
FIG. 2 is a schematic diagram of a scenario of a sound channel configuration method according to an embodiment of this application;
FIG. 3A is a schematic diagram of a hardware structure of a first electronic device according to an embodiment of this application;
FIG. 3B is a schematic diagram of a layout of a microphone of a first electronic device according to an embodiment of this application;
FIG. 4 is a schematic diagram 1 of an application scenario of a sound channel configuration method according to an embodiment of this application;
FIG. 5 is a flowchart 1 of a sound channel configuration method according to an embodiment of this application;
FIG. 6 is a schematic diagram of an interface according to an embodiment of this application;
FIG. 7 is a schematic diagram 2 of an application scenario of a sound channel configuration method according to an embodiment of this application;
FIG. 8 is a flowchart 2 of a sound channel configuration method according to an embodiment of this application;
FIG. 9 is a schematic diagram 3 of an application scenario of a sound channel configuration method according to an embodiment of this application;
FIG. 10 is a schematic diagram 4 of an application scenario of a sound channel configuration method according to an embodiment of this application;
FIG. 11 is a schematic diagram of a structure of a first electronic device according to an embodiment of this application; and
FIG. 12 is a schematic diagram of a structure of a second electronic device according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe purposes of specific embodiments, but are not intended to limit this application. The terms "one", "a" and "this" of singular forms used in this specification and the appended claims of this application are intended to include expressions such as "one or more", unless otherwise specified in the context clearly. It should be further understood that in the following embodiments of this application, "at least one" and "one or more" mean one, two, or more.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized. The term "connection" includes a direct connection and an indirect connection, unless otherwise indicated. "First" and "second" are merely intended for a purpose of description, and shall not be understood as an indication or implication of relative importance or implicit indication of the number of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

In some scenarios, to implement a stereo sound effect, an electronic device (for example, a large-screen device) needs to establish connections to at least two wireless sound boxes. In a sound playing process, the at least two wireless sound boxes can form a sound box system to work in coordination. In the sound box system, one wireless sound box corresponds to one sound channel, and respective audio playing effects are created at different positions, so that the sound box system formed by the wireless sound boxes can provide good auditory experience for a user.

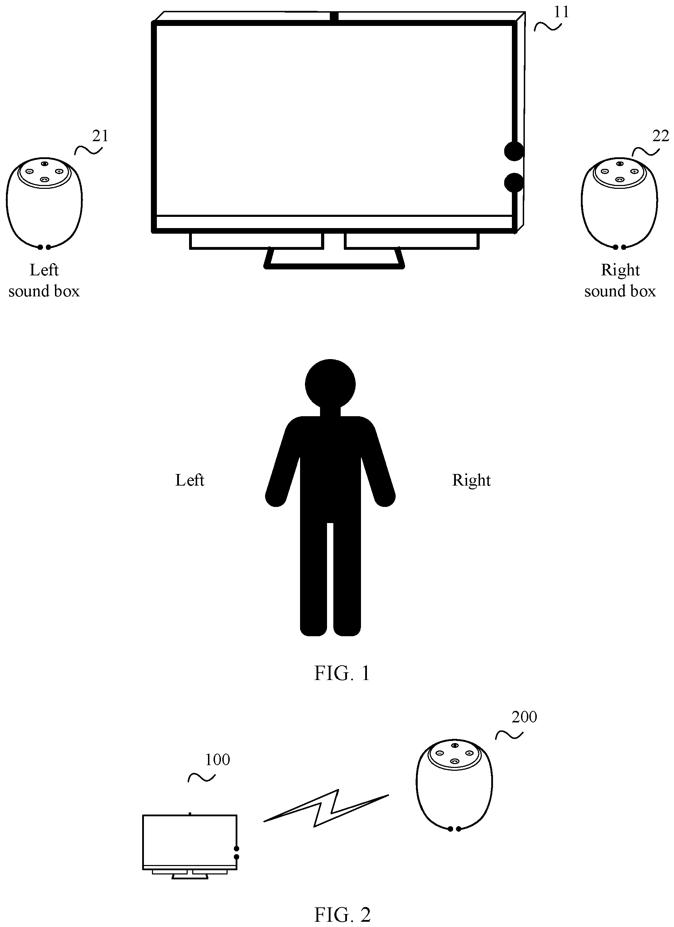

For example, as shown in FIG. 1, an electronic device 11 establishes connections to two wireless sound boxes (for example, a left sound box 21 and a right sound box 22). For example, a correspondence is established between the left sound box 21 on a left side of the electronic device 11 and a left sound channel of the electronic device 11, and a correspondence is established between the right sound box 22 on a right side of the electronic device 11 and a right sound channel of the electronic device 11. The left sound box 21 plays left sound channel audio in an audio file, and can simulate an audio range of the left ear of the user to generate sound output. The right sound box 22 plays right sound channel audio in the audio file, and can simulate an audio range of the right ear of the user to generate sound output. Therefore, the left sound box 21 and the right sound box 22 form a two-channel stereo sound box system, and can generate a stereo sound effect.

It can be learned that the sound box system provides a more stereo sound playing effect for the user on a premise that the wireless sound boxes in the sound box system separately establish correspondences with different sound channels of the electronic device, and the different sound channels are configured for corresponding wireless sound boxes to output sounds corresponding to the sound channels.

In some embodiments, after detecting a sound channel configuration operation of the user, the electronic device starts to perform Bluetooth scanning, and obtains and displays a Bluetooth identity document (identity document, ID) list that is obtained through scanning. The user configures a sound channel for a sound box at a corresponding position based on the Bluetooth ID. After detecting a selection confirmation operation performed by the user on the Bluetooth ID, the electronic device establishes a Bluetooth connection to the sound box and establishes a correspondence between the sound box and a corresponding sound channel. However, during initial sound box pairing, the sound box Bluetooth ID is usually a default name, and the user may not immediately establish a correspondence between the Bluetooth ID and a corresponding sound box. For example, in the scenario shown in FIG. 1, the to-be-paired left sound box 21 is placed on the left side of the electronic device 11, and the to-be-paired right sound box 22 is placed on the right side of the electronic device 11. Both the left sound box 21 and the right sound box 22 are powered on and Bluetooth functions are enabled, and both are in a to-be-paired state. The electronic device 11 scans for nearby Bluetooth devices that can be connected, and displays a Bluetooth ID list, where the Bluetooth ID list includes Bluetooth IDs "wireless sound box 1" and "wireless sound box 2". The user cannot directly determine whether the "wireless sound box 1" and the "wireless sound box 2" are respectively the Bluetooth ID of the left sound box 21 or the Bluetooth ID of the right sound box 22, and therefore cannot directly perform sound channel configuration. In this case, the user needs to first check sound box specifications or check device information labels at the bottoms of the sound boxes to determine the sound box Bluetooth IDs of the left sound box 21 and the right sound box 22, and then perform a sound channel configuration operation on a display based on displayed steps. The steps are complex. In some cases, a default name of a Bluetooth ID of a sound box is an irregular string of digits and letters. The user needs to spend a lot of time on comparison and confirmation, which may easily cause a pairing error. In addition, if the electronic device has a large quantity of sound channels to be configured, it is difficult for the user to perform operations in this process.

In some other embodiments, after detecting an operation of pressing a physical button on the sound box by the user, the sound box sends a signal to the electronic device, and the electronic device highlights the Bluetooth ID of the sound box in a displayed Bluetooth ID list, so that the user can confirm the Bluetooth ID of the sound box. Then, after establishing a pairing relationship with the sound box in response to an operation of tapping the highlighted Bluetooth ID by the user, the electronic device further needs to detect a sound channel configuration operation of the user, and perform sound channel configuration on the sound box. However, it can be learned that this sound channel configuration method still depends on manual confirmation of the user, and the user performs a plurality of sound channel configuration operations on the display, which makes it difficult for the user to perform operations and reduces user experience.

Based on this, embodiments of this application provide a sound channel configuration method. After a sound channel configuration operation of a user is detected, an electronic device can automatically configure a corresponding sound channel for each sound box based on a sound intensity collected by the electronic device and a sound intensity collected by each sound box whose sound channel is to be configured, thereby reducing operation difficulty of the user and improving user experience.

FIG. 2 is a schematic diagram of a scenario of a sound channel configuration method according to an embodiment of this application. As shown in FIG. 2, a first electronic device 100 establishes a communication connection to a second electronic device 200. For example, the first electronic device 100 establishes a wireless communication connection to the second electronic device 200. The first electronic device 100 may send, by using the wireless communication connection to the second electronic device 200, a to-be-played sound on the first electronic device 100 to the second electronic device 200 for playing. The to-be-played sound may be an audio file.

For example, the first electronic device 100 may include but is not limited to a device like a large-screen display apparatus (for example, a smart screen or a large-screen device), a notebook computer, a smartphone, a tablet computer, a projection device, a laptop (Laptop), a personal digital assistant (personal digital assistant, PDA), an invehicle device, an artificial intelligence (artificial intelligence, AI) device, and a wearable device (like a smartwatch). An operating system installed on the first electronic device 100 includes but is not limited to iOS^{®}, Android^{®}, Harmony^{®}, Windows^{®}, Linux^{®}, or another operating system. Alternatively, the first electronic device 100 may not be installed with the operating system. In some embodiments, the first electronic device 100 may be a fixed device or a portable device. A specific type of the first electronic device 100 and the operating system installed on the first electronic device 100 are not limited in this application.

For example, the second electronic device 200 may include but is not limited to an electronic device that has a sound playing function, like a sound box or a wireless sound box. The second electronic device 200 may be installed with the operating system. The operating system installed on the second electronic device 200 includes but is not limited to iOS^{®}, Android^{®}, Harmony^{®}, Windows', Linux^{®}, or another operating system. Alternatively, the second electronic device 200 may not be installed with the operating system. A specific type of the second electronic device 200, whether the second electronic device 200 is installed with the operating system, and a type of the operating system installed on the second electronic device 200 are not limited in this application.

The first electronic device 100 may establish the wireless communication connection to the second electronic device 200 by using a wireless communication technology. The wireless communication technology includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (like a wireless fidelity (wireless fidelity, Wi-Fi) network), near field wireless communication (near field communication, NFC), Zigbee (Zigbee), frequency modulation (frequency modulation, FM), and the like.

In some embodiments, both the first electronic device 100 and the second electronic device 200 support a proximity discovery function. For example, after the first electronic device 100 approaches the second electronic device 200, the first electronic device 100 and the second electronic device 200 can discover each other, and then establish the wireless communication connection like a Bluetooth connection or a Wi-Fi peer-to-peer (peer-to-peer, P2P) connection. Then, a correspondence is established between a sound channel of the second electronic device 200 and a sound channel of the first electronic device 100, to implement a sound playing function of the first electronic device 100.

In some embodiments, the first electronic device 100 establishes the wireless communication connection to the second electronic device 200 by using the local area network. For example, both the first electronic device 100 and the second electronic device 200 are connected to a same router.

It should be noted that there are one or more second electronic devices 200, and the one or more second electronic devices 200 form a sound box system of the first electronic device 100. The sound box system may include a mono sound channel, stereo, quasi-stereo, four-channel surround, 5.1-channel, 7.1-channel, and the like. A stereo sound box system includes, for example, two sound boxes, which separately correspond to a left sound channel and a right sound channel of the first electronic device 100. A four-channel surround sound box system includes, for example, four sound boxes, which separately correspond to a left front sound channel, a left rear sound channel, a right front sound channel, and a right rear sound channel of the first electronic device 100. A 5.1-channel sound box system includes, for example, six sound boxes, which separately correspond to the left sound channel, the right sound channel, a centered sound channel, a left surround sound channel, a right surround sound channel, and a heavy bass sound channel of the first electronic device 100.

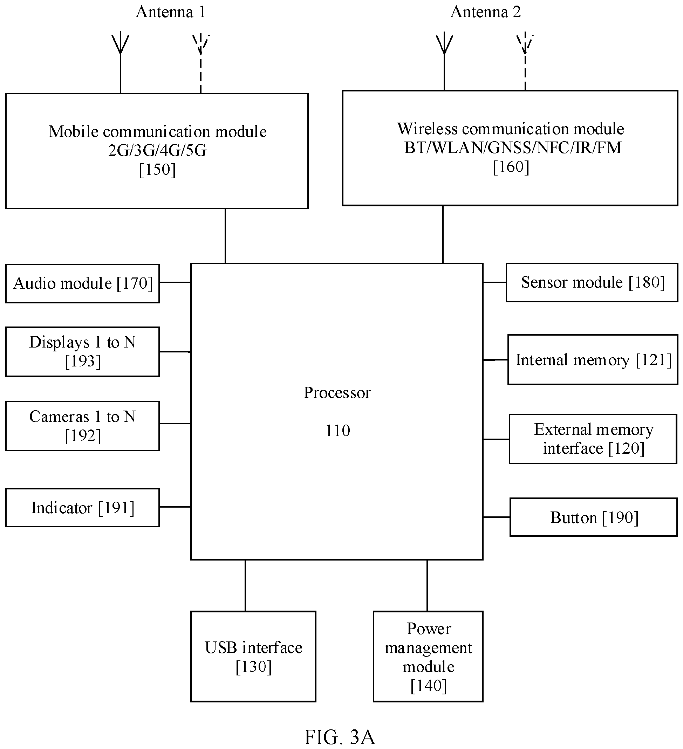

FIG. 3A is a schematic diagram of a structure of the first electronic device 100.

The first electronic device 100 may include a processor 110, an external memory interface 120, an internal memory 121, a universal serial bus (universal serial bus, USB) interface 130, a power management module 140, an antenna 1, an antenna 2, a mobile communication module 150, a wireless communication module 160, an audio module 170, a sensor module 180, a button 190, an indicator 191, a camera 192, a display 193, and the like.

It may be understood that a structure shown in this embodiment of this application does not constitute a specific limitation on the first electronic device 100. In some other embodiments of this application, the first electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 192, and the like through different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to a peripheral component like the display 193 or the camera 192. The MIPI interface includes a camera serial interface (camera serial interface, CSI), a display serial interface (display serial interface, DSI), and the like. In some embodiments, the processor 110 communicates with the camera 192 through the CSI interface, to implement a photographing function of the first electronic device 100. The processor 110 communicates with the display 193 through the DSI interface, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to transmit data between the first electronic device 100 and a peripheral device. The interface may be further configured to connect to another electronic device like an AR device.

It may be understood that, an interface connection relationship between the modules shown in this embodiment of this application is merely an example for description, and does not constitute a structural limitation on the first electronic device 100. In some other embodiments of this application, the first electronic device 100 may alternatively use an interface connection mode different from that in the foregoing embodiment, or use a combination of a plurality of interface connection modes.

The power management module 140 is configured to supply power to modules like the processor 110 included in the first electronic device 100. In summary of some embodiments, the power management module 140 may be configured to receive power supply input, and support the first electronic device 100 in working.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the first electronic device 100 may be configured to cover one or more communication bands. Different antennas may be further multiplexed, to improve antenna utilization. For example, the antenna 1 may be multiplexed as a diversity antenna of the wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device, or displays an image or a video by using the display 193. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the first electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into the electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using the wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The first electronic device 100 implements the display function by using the GPU, the display 193, the application processor, and the like. The GPU is a microprocessor for image processing, and is connected to the display 193 and the application processor. The GPU is configured to: perform mathematical and geometric computation, and render an image. The processor 110 may include one or more GPUs, which execute program instructions to generate or change display information.

The display 193 is configured to display an image, a video, and the like. The display 193 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the first electronic device 100 may include one or N displays 193, where N is a positive integer greater than 1.

The camera 192 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 192, where N is a positive integer greater than 1.

The external memory interface 120 may be configured to connect to an external memory card, for example, a micro SD card, to expand a storage capability of the first electronic device 100. The external memory card communicates with the processor 110 through the external memory interface 120, to implement a data storage function, for example, store files such as music and a video in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in a memory disposed in the processor, to perform various function applications of the first electronic device 100 and data processing.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110. The first electronic device 100 may implement an audio function such as music playing and recording by using the audio module 170, the application processor, and the like. The audio module 170 may include, for example, a speaker, a receiver, and a microphone.

The microphone, also referred to as a "mic" or a "sound conducting device", is configured to convert a sound signal into an analog audio electrical signal. The first electronic device 100 may collect a surrounding sound signal by using the microphone. The microphone may be a built-in component of the first electronic device 100, or may be an external accessory of the first electronic device 100.

In some embodiments, the first electronic device 100 may include one or more microphones. Each microphone or a plurality of microphones cooperate to implement a function of collecting sound signals in all directions, and converting the collected sound signals into analog audio electrical signals, and may further implement a noise reduction function, a sound source identification function, a directional recording function, and the like.

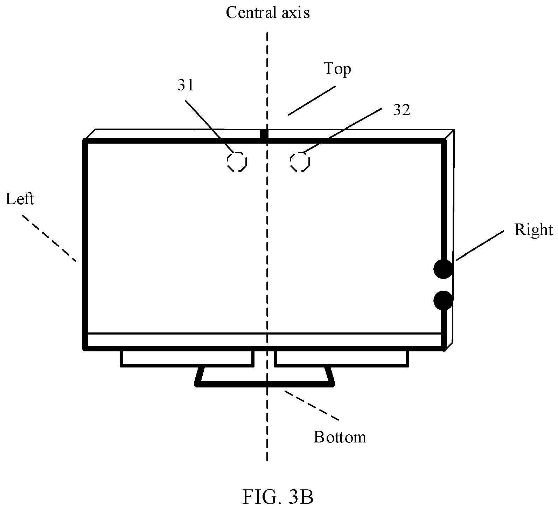

For example, FIG. 3B is an example of a schematic of a layout of a plurality of microphones of the first electronic device 100. As shown in FIG. 3B, when the first electronic device 100 is placed at a position shown in the figure, a front side of the first electronic device 100 is a plane on which the display 193 is located, a microphone 31 is located at a left position on the top (usually a side on which the display is located) of the first electronic device 100, and a microphone 32 is located at a right position on the top of the first electronic device 100. Further, the microphone 31 and the microphone 32 may also be left-right symmetric relative to a central axis of the display of the first electronic device 100.

It should be noted that, for "up", "down", "left", and "right" described in subsequent embodiments, refer to the orientation shown in FIG. 3B. Details are not described subsequently again.

In some embodiments, the first electronic device 100 can determine a position relationship between the electronic device and another device based on sound signals of the another device that are collected by the plurality of microphones of the first electronic device 100. For example, the another device is a sound box. The plurality of microphones of the first electronic device 100 are separately installed at different positions in the first electronic device 100. Therefore, distances between the microphones and the sound box are different. The first electronic device 100 can collect, by using each microphone, the sound signal sent by the sound box. A shorter distance between the microphone and the sound box indicates a larger collected sound intensity. Therefore, the first electronic device 100 may determine a position relationship between the sound box and the first electronic device 100 by using the sound intensity, to perform sound channel configuration. For example, it is assumed that a sound box A emits a sound signal, and to-be-configured sound channels of the first electronic device 100 include a left sound channel and a right sound channel. As shown in FIG. 3B, a sound intensity that is of the sound signal emitted by the sound box A and that is collected by a microphone 31 is 100 decibels (dB), and a sound intensity that is of the sound signal emitted by the sound box A and that is collected by a microphone 32 is 90 dB. In this case, the first electronic device 100 may determine, based on the sound intensities that are of the sound signal emitted by the sound box A and that are respectively collected by the microphone 31 and the microphone 32, that the distance between the sound box A and the microphone 31 is shorter than the distance between the sound box A and the microphone 32. The first electronic device 100 further determines, based on that the microphone 31 is installed on a left side of the first electronic device 100 and the microphone 32 is installed on a right side of the first electronic device 100, that the sound signal comes from the left side of the electronic device, and further determines that the to-be-configured sound channel is the left sound channel.

In some embodiments, the first electronic device 100 may further include more microphones. The microphone may be a directional microphone, and may collect a sound signal in a specific direction. Alternatively, the microphone may be a non-directional microphone, to collect sound signals in all directions, or may collect a sound signal within a specific range based on a position of the microphone in the first electronic device 100.

A quantity of microphones is not specifically limited in embodiments of this application.

The sensor module 180 may include a pressure sensor, a distance sensor, an optical proximity sensor, a fingerprint sensor, a temperature sensor, a touch sensor, an ambient light sensor, and the like.

The pressure sensor is configured to sense a pressure signal, and can convert the pressure signal into an electrical signal. In some embodiments, the pressure sensor may be disposed on the display 193. There are many types of pressure sensors like a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The first electronic device 100 determines an intensity of pressure based on the change in the capacitance. When a touch operation is performed on the display 193, the first electronic device 100 detects an intensity of the touch operation by using the pressure sensor. The first electronic device 100 may also calculate a touch position based on a detection signal of the pressure sensor.

The touch sensor is also referred to as a "touch component". The touch sensor may be disposed on the display 193, and the touch sensor and the display 193 form a touchscreen, which is also referred to as a "touch screen". The touch sensor is configured to detect a touch operation performed on or near the touch sensor. The touch sensor may transfer the detected touch operation to the application processor to determine a type of the touch event. Visual output related to the touch operation may be provided by using the display 193. In some other embodiments, the touch sensor may also be disposed on a surface of the first electronic device 100 at a position different from that of the display 193.

In some embodiments, the first electronic device 100 displays a sound box pairing confirmation interface by using the display 193, and after detecting, by using the touch sensor, that a user taps to start a pairing operation or receiving, by using the wireless communication module 160, a control instruction of a remote control, automatically establishes a correspondence between the sound box and a corresponding sound channel, to complete sound channel configuration.

The button 190 includes a power button, a volume button, and the like. The button 190 may be a mechanical button, or may be a touch button. The first electronic device 100 may receive button input, and generate button signal input related to a user setting and function control of the first electronic device 100.

The indicator 191 may be an indicator, and may be configured to indicate a power status, or may be configured to indicate a message, a notification, or the like.

For ease of description, the following embodiments are described by using an example in which the first electronic device 100 is a large-screen device and the second electronic device 200 is a wireless sound box. A person skilled in the art should understand that, unless otherwise specified, various forms or combinations of various forms of another electronic device, a single second electronic device, a plurality of second electronic devices, or the like also fall within the scope of embodiments of this application.

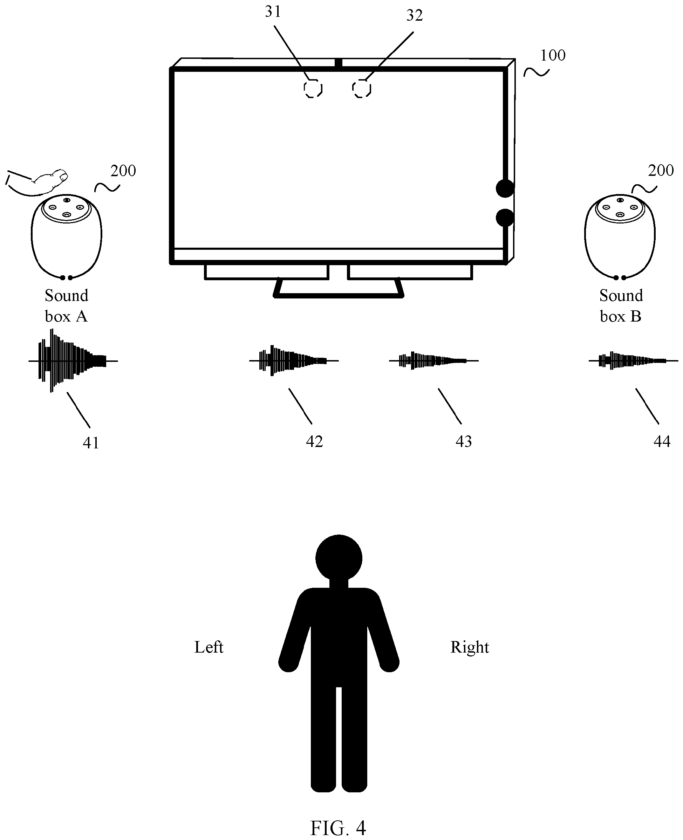

In some embodiments, when sound channel configuration is performed for the large-screen device, a correspondence between the wireless sound box at a corresponding position and a corresponding sound channel needs to be established. For example, in a scenario shown in FIG. 4, the scenario includes a large-screen device 100 and a wireless sound box 200, where the wireless sound box 200 includes a sound box A and a sound box B. It is assumed that to-be-configured sound channels of the large-screen device 100 include a left sound channel and a right sound channel. The large-screen device 100 needs to establish a correspondence between the sound box A on a left side of the large-screen device 100 and the left sound channel of the large-screen device 100, and establish a correspondence between the sound box B on a right side of the large-screen device 100 and the right sound channel of the large-screen device 100.

For example, a user may make a sound at or near a position of the wireless sound box 200, and the large-screen device detects the sound, and determines, based on a sound intensity of the sound, a to-be-configured sound channel corresponding to the wireless sound box at a position of the sound. As shown in FIG. 4, the user taps the sound box A by using a knuckle, and the large-screen device 100 collects a tapping sound by using the microphone 31 and the microphone 32, and separately determines sound intensities of the sounds obtained by the microphone 31 and the microphone 32. For example, a sound waveform 42 indicates a sound intensity of the tapping sound collected by the microphone 31, and a sound waveform 43 indicates a sound intensity of the tapping sound collected by the microphone 32. If the microphone 31 is located on a left side closer to the sound box A, the sound intensity of the tapping sound collected by the microphone 31 should be greater than the sound intensity of the tapping sound collected by the microphone 32. For example, a signal amplitude of the sound waveform 42 is greater than a signal amplitude of the sound waveform 43. The large-screen device 100 determines, based on the sound intensities of the tapping sound collected by the microphones of the large-screen device 100, that a current sound-emitting position is on the left side of the large-screen device 100, and therefore, a correspondence needs to be established between a wireless sound box at the position and the left sound channel. Then, the large-screen device 100 needs to determine which wireless sound box of the sound box A and the sound box B is the wireless sound box at the current sound-emitting position.

As shown in FIG. 4, in a process in which the user taps the sound box Aby using the knuckle, the wireless sound box 200 can also collect the tapping sound by using microphones included in the wireless sound box 200. For example, a sound waveform 41 indicates a sound intensity of the tapping sound collected by the sound box A by using a microphone included in the sound box A, and a sound waveform 44 indicates a sound intensity of the tapping sound collected by the sound box B by using a microphone included in the sound box B. That the user taps the sound box A by using the knuckle may be understood as that the sound box A is the wireless sound box at the sound-emitting position, and the sound box A is closer to the sound-emitting position than the sound box B. Therefore, a sound intensity of the tapping sound collected by the sound box A should be greater than a sound intensity of the tapping sound collected by the sound box B. The sound box A and the sound box B send, to the large-screen device 100, the sound intensities of the tapping sound collected by the sound box A and the sound box B, and the large-screen device 100 obtains second sound intensities of the tapping sound collected by the wireless sound box 200. Therefore, the large-screen device 100 can determine, based on the sound intensities of the tapping sound collected by the wireless sound box 200, whether a to-be-paired wireless sound box is specifically the sound box A or the sound box B of the wireless sound box 200. For example, if the large-screen device 100 determines that the sound intensity of the tapping sound collected by the sound box A is large, for example, a signal amplitude of the sound waveform 41 is greater than a signal amplitude of the sound waveform 44, the large-screen device 100 determines that the wireless sound box at the current sound-emitting position is the sound box A. Therefore, the large-screen device 100 establishes the correspondence between the sound box A and the left sound channel, to complete left sound channel configuration.

Correspondingly, the user may further tap the sound box B by using the knuckle, and the large-screen device 100 and the wireless sound box 200 repeat the foregoing steps, so that the large-screen device 100 can automatically complete right sound channel configuration based on a sound intensity of the tapping sound received by the microphone of the large-screen device 100 and a sound intensity that is of the tapping sound received by the wireless sound box 200 and that is sent by the wireless sound box 200 and received by the large-screen device 100.

In this way, the user can complete sound channel configuration on the large-screen device by using only a simple tapping operation. Operation steps are simple, sound channel configuration efficiency is high, and user experience can be effectively improved.

It should be noted that sound intensities of the sound emitted by the user at or near the position of the wireless sound box each time should be uniform and close. For example, the sound is a tapping sound generated after the user taps the wireless sound box, and the user should tap each wireless sound box with a same or similar force each time, so that sound intensities of all tapping sounds are similar, to avoid a sound channel configuration error caused by a large difference between the sound intensities of the tapping sounds. In addition, the wireless sound boxes should have the same or similar sound receiving performance, to avoid a sound channel configuration error caused by a large difference in the sound receiving performance of the wireless sound boxes. Details are not described again in the following.

The following describes in detail the sound channel configuration method provided in embodiments of this application.

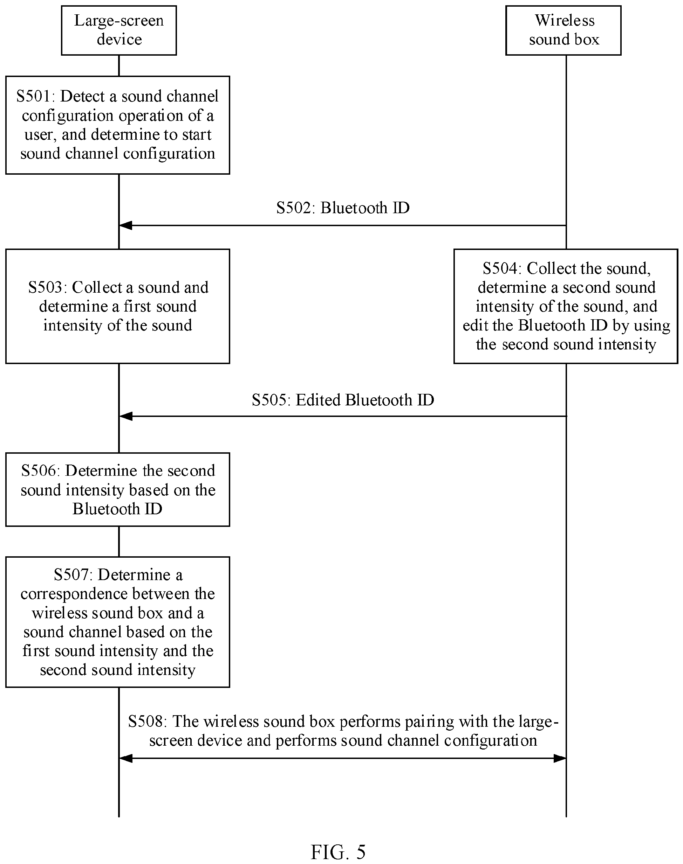

For example, FIG. 5 is a schematic diagram of a sound channel configuration method according to an embodiment of this application. As shown in FIG. 5, the method may include S501 to S508.

S501: A large-screen device detects a sound channel configuration operation of a user, and determines to start sound channel configuration.

The sound channel configuration operation includes, for example, a touch operation (for example, an operation of tapping a control for confirming to start the sound channel configuration) of the user on a display, a voice operation indicating the sound channel configuration, an operation of inputting a sound channel configuration command by using a physical button on the large-screen device, and an operation of inputting a sound channel configuration command by using a remote control.

In some embodiments, after detecting the sound channel configuration operation, the large-screen device determines that sound channel configuration needs to be performed and that pairing with a wireless sound box is required, and establishes a pairing relationship like a Bluetooth pairing relationship or a Wi-Fi pairing relationship. Then, the large-screen device can configure, based on the paring relationship, a sound channel of the large-screen device for a corresponding wireless sound box, so that sound playing of the large-screen device can be subsequently implemented by using the configured wireless sound box. In this case, after detecting the sound channel configuration operation, the large-screen device starts to scan to-be-paired devices, and then establishes correspondences between a sound channel and some or all devices in the to-be-paired devices by performing the following steps, to complete sound channel configuration.

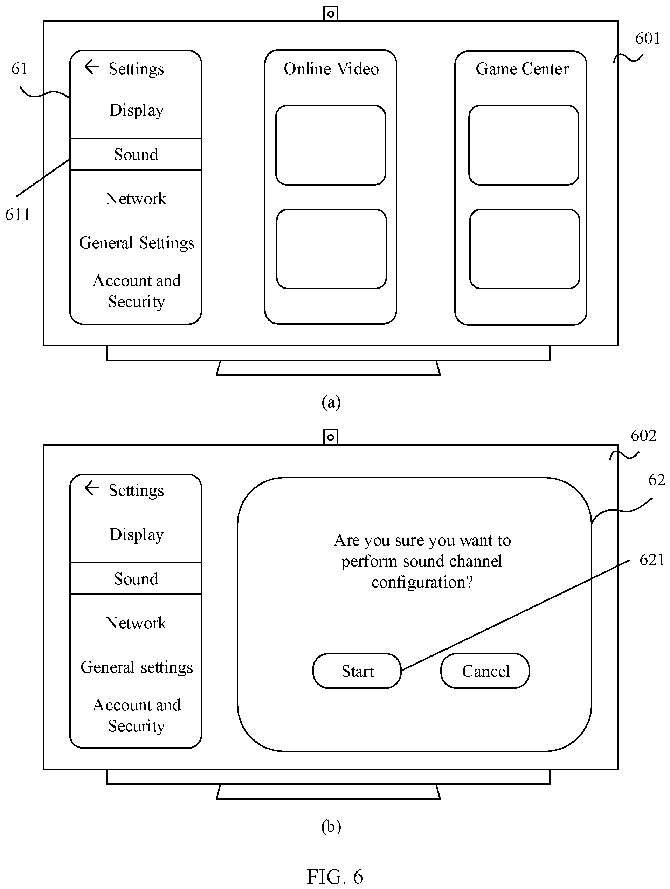

For example, in an interface 601 shown in (a) in FIG. 6, in a process of displaying a setting menu 61, if the large-screen device detects an operation of tapping, by the user, a sound setting control 611 displayed on the setting menu 61, the large-screen device displays an interface 602 shown in (b) in FIG. 6. If the large-screen device determines that a current sound channel is to be configured, the large-screen device displays a prompt box 62 on the interface 602, to prompt the user whether to confirm to start sound channel configuration. If an operation of tapping a start control 621 by the user is detected, it is determined that a current user needs to configure a sound channel of the large-screen device, a pairing connection needs to be established between the large-screen device and a wireless sound box, and the sound channel needs to be configured for a corresponding wireless sound box.

In some embodiments, after detecting the sound channel configuration operation of the user, the large-screen device further needs to determine a quantity of to-be-configured sound channels, to subsequently determine data of a to-be-paired wireless sound box that needs to be detected, to perform pairing. For example, if the large-screen device determines that the to-be-configured sound channels include a left sound channel and a right sound channel, the large-screen device needs to detect only two wireless sound boxes to perform pairing. For another example, if the large-screen device determines that the large-screen device is a 5.1-channel device, the large-screen device needs to complete pairing with six wireless sound boxes to complete sound channel configuration.

S502: The large-screen device obtains a Bluetooth ID of the wireless sound box.

In some embodiments, after enabling a Bluetooth function, the large-screen device can scan for a nearby device that has enabled Bluetooth and is in a to-be-paired state, and obtain a Bluetooth ID of the device. For example, in a Bluetooth scanning process, the large-screen device can obtain a Bluetooth ID list that includes the Bluetooth ID of the wireless sound box.

It should be noted that a sequence of performing step S501 and step S502 is not limited in this embodiment of this application. For example, when the Bluetooth function is enabled on the large-screen device, the large-screen device may start to scan a Bluetooth device when no sound channel configuration operation of the user is detected; or the large-screen device starts to scan a Bluetooth device after determining that the sound channel configuration operation of the user is detected.

S503: The large-screen device collects a sound and determines a first sound intensity of the sound.

In some embodiments, the first sound intensity includes, for example, a sound intensity of a sound that corresponds to a position of the wireless sound box and that is collected by the large-screen device by using a microphone of the large-screen device. For example, after determining that the sound channel configuration needs to be started, the large-screen device performs sound pickup by using the microphone of the large-screen device, and determines a first sound intensity of the picked-up sound. There are one or more first sound intensities, corresponding to a quantity of microphones configured for the large-screen device. For example, if the large-screen device includes two microphones, the two microphones separately collect sound intensities of the sound corresponding to the position of the wireless sound box, and the large-screen device obtains two first sound intensities.

In some embodiments, when determining that a sound feature of the collected sound meets a preset condition, the large-screen device determines that the collected sound is a sound used to configure a sound channel, and then determines the first sound intensity of the sound. The sound feature includes one or more of a frequency feature, an amplitude feature, a waveform feature, and a duration feature.

For example, a sound frequency of tapping a sound box by a human knuckle is generally 800 Hz to 1200 Hz. In a sound pickup process, the large-screen device picks up a sound in the frequency range, and obtains a corresponding sound intensity. Further, optionally, the large-screen device may determine whether a feature of the picked-up sound in the frequency range matches a feature (for example, a sound waveform has one or more peaks) of a sound emitted by tapping a sound box by using the human knuckle. If the two features match, the large-screen device determines that the picked-up sound in the frequency range is the sound emitted by tapping the sound box by using the human knuckle, and determines that the sound is indeed a sound generated when the user wants to perform sound channel configuration on the large-screen device and taps the sound box by using the knuckle, and is not an interference sound like a human sound, music, or environmental background noise.

In the scenario shown in FIG. 4, after performing the sound channel configuration operation on the large-screen device 100, the user may tap the wireless sound box 200 by using the knuckle, so that the large-screen device 100 determines a position of the wireless sound box 200 relative to the large-screen device 100. For example, as shown in FIG. 4, the user taps the sound box A by using the knuckle, to make the tapping sound, the large-screen device 100 uses the microphone 31 and the microphone 32 to pick up the sound, and the large-screen device 100 separately determines first sound intensities corresponding to the sound picked up by the microphone 31 and the microphone 32. If the first sound intensity corresponding to the sound picked up by the microphone 31 is greater than the first sound intensity corresponding to the sound picked up by the microphone 32, the large-screen device 100 determines that the wireless sound box 200 currently tapped by the user by using the knuckle is located on a left side of the large-screen device. If the first sound intensity corresponding to the sound picked up by the microphone 32 is greater than the first sound intensity corresponding to the sound picked up by the microphone 31, the large-screen device 100 determines that the wireless sound box 200 currently tapped by the user by using the knuckle is located on a right side of the large-screen device. If the first sound intensity corresponding to the sound picked up by the microphone 31 is very close to the first sound intensity corresponding to the sound picked up by the microphone 32, the large-screen device 100 determines that the wireless sound box 200 currently tapped by the user by using the knuckle is located near a central axis of the large-screen device.

In some embodiments, a sound corresponding to the position of the wireless sound box may further include a sound generated at or near the position of the wireless sound box, for example, a sound generated when the user beats the wireless sound box, a sound generated when the user makes a finger, claps, or coughs near the wireless sound box, and audio played by the wireless sound box. A position near the wireless sound box indicates that a sound generating position is near the position of the wireless sound box, for example, a distance between the sound generating position and the position of the wireless sound box is less than or equal to a preset threshold. For example, in the scenario shown in FIG. 4, the user may tap the sound box A by using the knuckle, or may make a sound at a position near the sound box A and away from the sound box B.

In some embodiments, an electronic device collects a sound within preset time after the sound channel configuration operation of the user is detected, and determines a first sound intensity of the sound. If no sound is collected within the preset time, the sound channel configuration is stopped. For example, the preset time is 5 minutes, and the electronic device detects a sound whose sound frequency ranges from 800 Hz to 1200 Hz within 5 minutes after the sound channel configuration operation of the user is detected. If the sound in the sound frequency range is detected within 5 minutes, the first sound intensity is determined; and if no sound in the sound frequency range is detected within 5 minutes, the sound channel configuration is stopped.

S504: The wireless sound box collects the sound, determines a second sound intensity of the sound, and edits the Bluetooth ID by using the second sound intensity.

In some embodiments, if the wireless sound box does not establish the pairing connection to another electronic device, the wireless sound box is in an unpaired state. When the wireless sound box is in the unpaired state, if it is determined that a sound feature of a collected sound meets the preset condition, that the collected sound is a sound used for pairing is determined. In this case, the wireless sound box determines the second sound intensity of the sound, and edits, by using the second sound intensity, a Bluetooth ID used for pairing. The sound feature includes one or more of the frequency feature, the amplitude feature, the waveform feature, and the duration feature.

In some embodiments, the second sound intensity includes, for example, a sound intensity of a sound that corresponds to a position of the wireless sound box and that is collected by the wireless sound box by using a microphone of the wireless sound box. There are one or more second sound intensities, corresponding to a quantity of to-be-paired wireless sound boxes. For example, the quantity of the to-be-paired wireless sound boxes is 2, and the two wireless sound boxes respectively collect sound intensities of sounds corresponding to respective locations. In this case, a quantity of the second sound intensities is 2.

For example, in the scenario shown in FIG. 4, after the user taps the sound box A with the knuckle, the microphone included in the large-screen device 100 can collect the tapping sound, and the wireless sound box 200 usually also includes the microphone. Therefore, the wireless sound box 200 can also collect the tapping sound. For example, both the sound box A and the sound box B can separately collect the sound generated when the user taps the sound box A by using the knuckle, and may determine sound intensities of the sound. Then, the sound box A and the sound box B separately send the sound intensities determined by the sound box A and the sound box B to the large-screen device 100. For example, after separately determining the sound intensities, the sound box A and the sound box B use the sound intensities as Bluetooth ID suffixes, and edit Bluetooth IDs of the sound box A and the sound box B. In this way, in a process of scanning for the Bluetooth devices, the large-screen device can determine a Bluetooth device whose Bluetooth ID suffix changes, and can determine, based on a changed Bluetooth ID suffix, a second sound intensity corresponding to the sound collected by the wireless sound box 200.

It should be understood that, in addition to using the sound intensity as a suffix of the Bluetooth ID to edit the Bluetooth ID, the wireless sound box may also use the sound intensity as a prefix of the Bluetooth ID, a character inserted in the middle of the Bluetooth ID, and the like to edit the Bluetooth ID. Alternatively, the wireless sound box may not edit the Bluetooth ID, but edit another field in the Bluetooth protocol.

S505: The wireless sound box sends an edited Bluetooth ID to the large-screen device.

In some embodiments, after the wireless sound box edits the Bluetooth ID based on the second sound intensity, in a process of scanning for the nearby device that has enabled Bluetooth and is in the to-be-paired state, the large-screen device can obtain a Bluetooth ID edited by the wireless sound box. In other words, the wireless sound box sends the edited Bluetooth ID to the large-screen device.

S506: The large-screen device determines the second sound intensity based on the Bluetooth ID.

In some embodiments, in the Bluetooth scanning process, if the large-screen device finds that some or all Bluetooth ID suffixes in the Bluetooth ID list obtained through scanning change, the large-screen determines the Bluetooth device whose Bluetooth ID suffix changes as a to-be-paired wireless sound box, and obtains a corresponding second sound intensity. The change of the Bluetooth ID suffix includes, for example, a newly-added suffix of the changed Bluetooth ID compared with an original Bluetooth ID. For example, the original Bluetooth ID does not have a suffix, and a suffix is added to the changed Bluetooth ID compared with the original Bluetooth ID; or the original Bluetooth ID has a suffix, and another suffix is added to the changed Bluetooth ID compared with the original Bluetooth ID. The large-screen device determines a corresponding device identity based on a part of the Bluetooth ID that does not change (that is, determines that the device and a device corresponding to the Bluetooth ID that has a newly-added suffix part are a same device), and determines that the second sound intensity is a newly-added suffix part of the Bluetooth ID.

For example, as shown in Table 1, it is assumed that, in the scenario shown in FIG. 4, an original Bluetooth ID (that is, a Bluetooth ID before the sound box A determines the second sound intensity) of the sound box A is XXX, and an original Bluetooth ID (that is, a Bluetooth ID before the sound box B determines the second sound intensity) of the sound box B is XXXX. In the Bluetooth scanning process, the large-screen device 100 determines that a suffix is added to the Bluetooth ID of the sound box A, for example, the Bluetooth ID of the sound box A changes from XXX to XXX-120, and a suffix 120 is added, and therefore determines that the sound intensity collected by the sound box A is 120 dB; and determines that a suffix is added to the Bluetooth ID of the sound box B, for example, the Bluetooth ID of the sound box B changes from XXXX to XXXX-60, and a suffix 60 is added, and therefore determines that the sound intensity collected by the sound box B is 60 dB.

**Table 1**

| Bluetooth device | Original Bluetooth ID | Edited Bluetooth ID |
|---|---|---|
| Sound box A | XXX | XXX-120 |
| Sound box B | XXXX | XXXX-60 |
| Device 1 | 123 | 123 |
| Device 2 | 13235 | 13235 |
| Device 3 | 75369 | 75369 |

In some embodiments, the electronic device receives the second sound intensity within the preset time after collecting the sound, that is, performs step S505 and step S506 within the preset time after step S503 is performed. If no second sound intensity is received within the preset time, the sound channel configuration is stopped. For example, the preset time is 10 minutes, and the electronic device detects, within 10 minutes after collecting the sound, a device whose Bluetooth ID changes, and determines the second sound intensity. If the device whose Bluetooth ID changes is detected within 10 minutes, the second sound intensity is determined; or if no device whose Bluetooth ID changes is detected within 10 minutes, the sound channel configuration is stopped.

In some implementations, if in step S504, what is edited by the wireless sound box is not the Bluetooth ID, but the another field in the Bluetooth protocol, step S505 is that the wireless sound box sends an edited Bluetooth protocol field to the large-screen device, and step S506 is that the large-screen device determines the second sound intensity based on the Bluetooth protocol field.

In some implementations, in step S504, the wireless sound box edits the Bluetooth ID based on a preset rule, and adds second sound intensity information to the Bluetooth ID. In this case, in step S506, in a process of scanning a to-be-paired device, the large-screen device can determine an edited Bluetooth ID that meets the preset rule. Then, the large-screen device parses the edited Bluetooth ID based on the preset rule, and can obtain the second sound intensity (for example, obtain the second sound intensity from a preset field). In other words, the large-screen device does not need to determine a changed Bluetooth ID based on the Bluetooth ID list previously obtained through scanning, and then determine the second sound intensity based on a changed part.

In some scenarios, after determining the sound intensity, the wireless sound box may further directly send the sound intensity to the large-screen device. For example, if the wireless sound box and the large-screen device are connected to a same wireless network, the wireless sound box can directly send the sound intensity to the large-screen device through a Wi-Fi connection. Based on this, the large-screen device and the wireless sound box may not need to perform step S502 and step S505, and in step S504, the wireless sound box does not need to edit the Bluetooth ID.

It should be noted that an execution sequence of step S503 and step S504 to step S506 is not limited in this embodiment of this application. For example, the large-screen device first collects the sound, determines the first sound intensity of the sound, then receives the Bluetooth ID sent by the wireless sound box, and determines the second sound intensity (that is, first performs step S503, and then performs step S504 to step S506). For another example, the large-screen device first receives the Bluetooth ID sent by the wireless sound box, determines the second sound intensity, then collects the sound, and determines the first sound intensity of the sound (that is, first performs step S504 to step S506, and then performs step S503). For another example, when collecting the sound and determining the first sound intensity of the sound at the same time, the large-screen device receives the Bluetooth ID sent by the wireless sound box and determines the second sound intensity (that is, performs step S503 in parallel with step S504 to step S506).

S507: The large-screen device determines a correspondence between the wireless sound box and the sound channel based on the first sound intensity and the second sound intensity.

In some implementations, after obtaining the first sound intensity, the large-screen device can roughly determine the to-be-configured sound channel based on the first sound intensity.

For example, in the scenario shown in FIG. 4, it is assumed that the to-be-configured sound channels include the left sound channel and the right sound channel, the sound intensity of the sound collected by the microphone 31 is 100 dB, and the sound intensity of the sound collected by the microphone 32 is 90 dB, the large-screen device 100 determines that the sound intensity collected by the microphone 31 on the left side of the large-screen device 100 is greater than the sound intensity collected by the microphone 32 on the right side of the large-screen device 100 (that is, 100 dB > 90 dB), determines that the collected sound comes from the left side of the large-screen device, and then determines that the to-be-configured sound channel is the left sound channel.

In some implementations, after roughly determining the to-be-configured sound channel, the large-screen device can determine, based on the second sound intensity, which wireless sound box is specifically the wireless sound box at the sound-emitting position, to establish a correspondence between the wireless sound box at the sound-emitting position and the to-be-paired sound channel.

For example, in the scenario shown in FIG. 4, as shown in Table 1, the large-screen device 100 determines, based on the suffix of the edited Bluetooth ID, that the second sound intensity of the sound box A is greater than the second sound intensity of the sound box B (that is, 120 dB > 60 dB), then determines that the wireless sound box at the sound-emitting position is the sound box A, and further determines that there is the correspondence between the sound box A and the left sound channel and the left sound channel needs to be configured for the sound box A.

S508: The wireless sound box performs pairing with the large-screen device and performs sound channel configuration.

In some embodiments, after determining the correspondence between the wireless sound box and the sound channel, the large-screen device sends a pairing request to a corresponding wireless sound box. Correspondingly, the wireless sound box sends a pairing response, and the large-screen device completes pairing with the wireless sound box based on the pairing response, establishes a pairing relationship like a Bluetooth pairing relationship and a Wi-Fi pairing relationship, and configures a determined to-be-configured sound channel for the wireless sound box. The configuring the to-be-configured sound channel for the wireless sound box indicates that a correspondence between the to-be-configured sound channel and the wireless sound box is established, and subsequently, a sound of the corresponding sound channel is played by using the wireless sound box. Optionally, the configuring the to-be-configured sound channel for the wireless sound box may also be described as providing the wireless sound box with the to-be-configured sound channel.

For example, in the scenario shown in FIG. 4, configuration on the left sound channel is completed by performing step S501 to step S508. Then, the large-screen device may detect, by repeating step S503 to step S508, a sound intensity of tapping the sound box B by the user using the knuckle, establish the pairing relationship with the sound box B, and complete configuration on the right sound channel.

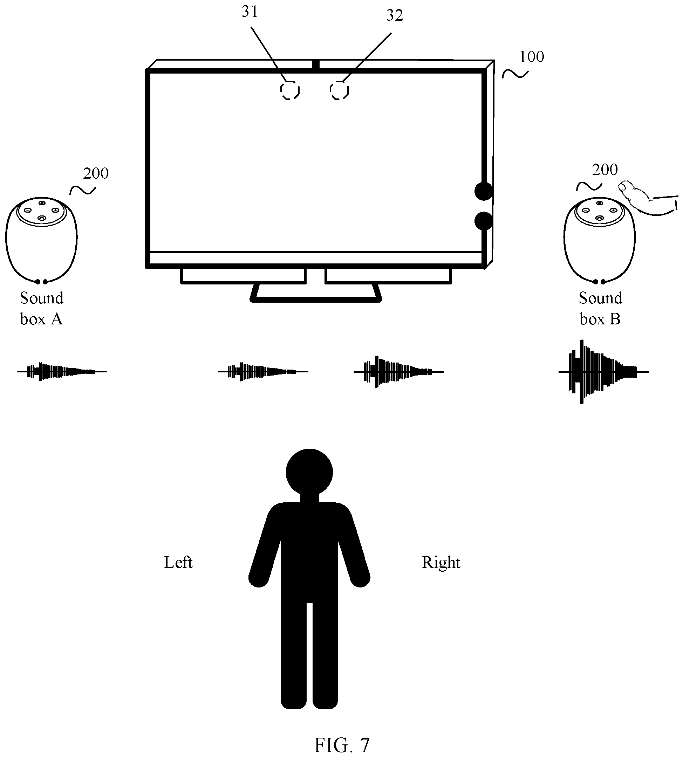

Correspond to the scenario shown in FIG. 4, as shown in FIG. 7. The user taps the sound box B by using the knuckle, the first sound intensity collected by the microphone 31 of the large-screen device 100 is 90 dB, the first sound intensity collected by the microphone 32 is 100 dB, the large-screen device 100 determines that the sound intensity collected by the microphone 32 on the right side of the large-screen device 100 is greater than the sound intensity collected by the microphone 31 on the left side of the large-screen device 100 (that is, 100 dB > 90 dB), and the large-screen device 100 determines that the to-be-configured sound channel is the right sound channel. The large-screen device 100 determines, based on a detected Bluetooth ID (for example, XXX-60) of the sound box A, that the second sound intensity collected by the sound box A is 60 dB; and determines, based on a detected Bluetooth ID (for example, XXXX-120) of the sound box B, that the second sound intensity collected by the sound box B is 120 dB. Therefore, if it is determined that the wireless sound box at the sound-emitting position is the sound box B (that is, 120 dB > 60 dB), that establishing a correspondence between the sound box B and the right sound channel is determined. The large-screen device 100 establishes the pairing relationship with the sound box B, and configures the right sound channel for the sound box B to complete configuration on the right sound channel.

In some other embodiments, the step of establishing the pairing relationship between the large-screen device and the wireless sound box and the step of performing sound channel configuration on the wireless sound box by the large-screen device may be performed in a same step, or may be separately performed in different steps. For example, as described in step S508, after determining the to-be-configured sound channel and the corresponding to-be-paired wireless sound box, the large-screen device may pair with the wireless sound box and complete configuration on the to-be-configured sound channel. In other words, the step of establishing the pairing relationship and the step of configuring the sound channel are synchronously performed. For another example, after determining the second sound intensity in step S506, the large-screen device may determine a wireless sound box corresponding to a largest second sound intensity. Then, the large-screen device can directly establish the pairing relationship with the wireless sound box. In this case, in step S508, based on the established pairing relationship, the large-screen device needs to only complete sound channel configuration, and does not need to perform pairing. In other words, the step of establishing the pairing relationship and the step of configuring the sound channel are performed separately.

In some embodiments, after completing sound channel configuration, the large-screen device may invoke an audio management module to identify a sound channel that is configured, where an identifier indicates a correspondence between the sound channel and the wireless sound box. Then, in a sound playing process, the audio management module may send, based on the identifier, one-source audio of different channels to a corresponding wireless sound box for playing. For example, in the scenario shown in FIG. 4, the large-screen device 100 invokes the audio management module to play a sound, and the audio management module sends, based on the identifier, one-source audio corresponding to the left sound channel with the sound box A for playing. An audio file to be played by the large-screen device should include multi-source audio, where each piece of one-source audio corresponds to one sound channel, and the large-screen device plays corresponding one-source audio by using different sound channels, so that a stereo sound effect can be implemented.

It should be noted that, in the steps shown in FIG. 5, after performing the sound channel configuration operation, the user may start to make a sound at a corresponding position of the wireless sound box in a manner such as tapping by using the knuckle. In this process, an operation sequence and operation time of the user are not specifically limited in this embodiment of this application. For example, in the scenarios shown in FIG. 4 and FIG. 7, the user may first tap the sound box A, and then tap the sound box B; or first tap the sound box B, and then tap the sound box A. For another example, the user taps the sound box A twice and taps the sound box B five times; or the user taps the sound box B twice and taps the sound box A five times.

In this way, based on the sound channel configuration method provided in this embodiment of this application, the large-screen device can automatically complete sound channel configuration in response to the sound channel configuration operation of the user. In a sound channel configuration process, the user needs to only complete a simple operation such as tapping the wireless sound box, does not need to confirm a name of the wireless sound box, and does not need to perform more operations on the display of the large-screen device. In this way, user operations in the sound channel configuration process are effectively simplified, and user experience is improved.

In some implementations, after determining that the sound channel configuration is completed, the large-screen device may further display prompt information or play a voice prompt, to prompt the user that the sound channel configuration is completed for use. Alternatively, each time a sound channel is configured, the large-screen device displays prompt information once or plays a voice prompt, to present the sound channel configuration process to the user.

In some embodiments, after detecting the sound channel configuration operation of the user, the large-screen device may further display operation guide information to guide the user to separately tap each to-be-paired wireless sound box. The operation guide information may include a text, a picture, an animation, and/or a video.

In some scenarios, if the large-screen device determines that there is one to-be-configured sound channel, step S503 may not be performed, that is, the first sound intensity does not need to be collected. Then, based on an obtained second sound intensity, the large-screen device directly pairs with the wireless sound box that collects a largest second sound intensity, and configures the sound channel for the wireless sound box. In other words, after determining the Bluetooth device whose Bluetooth ID suffix changes, the large-screen device establishes a correspondence between the Bluetooth device and the to-be-configured sound channel, to complete sound channel configuration.

In some other scenarios, in a sound box system, for example, in a dual-channel sound box system (that is, a stereo sound box system including the left sound channel and the right sound channel), in which there is only one wireless sound box in each direction corresponding to two sides of the central axis of the large-screen device, the large-screen device can directly determine the to-be-configured sound channel based on the first sound intensity collected by the microphone of the large-screen device at one time. In this case, the to-be-configured sound channel may be directly determined after the first sound intensity is determined in step S503, without waiting for receiving the second sound intensity to determine the to-be-configured sound channel. For example, in the dual-channel sound box system, after collecting the tapping sound, the large-screen device may determine, based on the first sound intensity of the tapping sound, that the to-be-configured sound channel is the left sound channel or the right sound channel. Optionally, a current scenario also includes a scenario in which one wireless sound box is configured in a central axis direction of the large-screen device.

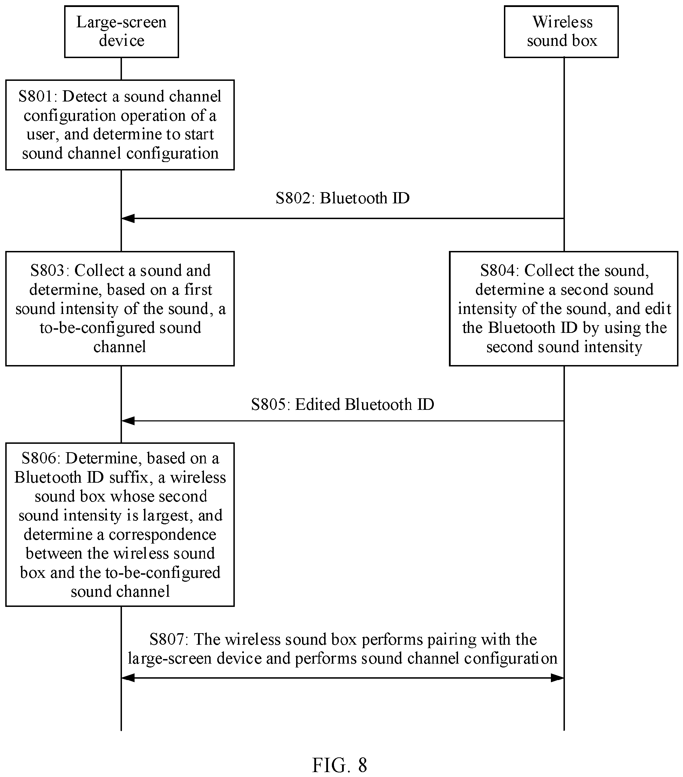

For example, FIG. 8 is a schematic diagram of another sound channel configuration method according to an embodiment of this application. As shown in FIG. 8, the method may include S801 to S807.

S801: A large-screen device detects a sound channel configuration operation of a user, and determines to start sound channel configuration.

S802: The large-screen device obtains a Bluetooth ID of a wireless sound box.

Optionally, for step S801 and step S802, refer to related descriptions of step S501 and step S502. Details are not described herein again.

S803: The large-screen device collects a sound and determines, based on a first sound intensity of the sound, a to-be-configured sound channel.

For example, it is assumed that the large-screen device includes a left sound channel and a right sound channel. In the scenario shown in FIG. 4, after detecting the sound of the user tapping the sound box A by using the knuckle, the large-screen device may determine a corresponding to-be-configured sound channel based on the first sound intensity collected by the microphone of the large-screen device. For example, if it is determined that the sound intensity of the sound collected by the microphone 31 is 100 dB, and the sound intensity of the sound collected by the microphone 32 is 90 dB, the large-screen device 100 determines that the collected sound comes from the left side of the large-screen device, and further determines that the to-be-configured sound channel is the left sound channel.

Optionally, for remaining content of step S803, refer to related descriptions of step S503. Details are not described herein again.

S804: The wireless sound box collects the sound, determines a second sound intensity of the sound, and edits a Bluetooth ID by using the second sound intensity.

S805: The wireless sound box sends an edited Bluetooth ID to the large-screen device.

Optionally, for step S804 and step S805, refer to related descriptions of step S504 and step S505. Details are not described herein again.

S806: The large-screen device determines, based on a Bluetooth ID suffix, a wireless sound box whose second sound intensity is largest, and determines a correspondence between the wireless sound box and the to-be-configured sound channel.

For example, in the scenario shown in FIG. 4, it is assumed that in the Bluetooth scanning process, the large-screen device 100 determines that the second sound intensity collected by the sound box A is 120 dB, and determines that the sound intensity collected by the sound box B is 60 dB. In this case, the large-screen device determines that the wireless sound box at the sound-emitting position is the sound box A, and therefore, the sound box A needs to be paired with the left sound channel determined in step S803.

Optionally, for remaining content of step S806, refer to related descriptions of step S506 and step S507. Details are not described herein again.

S807: The wireless sound box performs pairing with the large-screen device and performs sound channel configuration.

Optionally, for step S807, refer to related descriptions of step S508. Details are not described herein again.

Then, step S802 to step S807 are cyclically performed to complete configuration on all sound channels of the large-screen device.

In this way, in the method shown in FIG. 8, each time the user taps one wireless sound box, the large-screen device may determine the to-be-configured sound channel based on the first sound intensity of the tapping sound, and does not need to determine the to-be-configured sound channel after obtaining the second sound intensity according to the method shown in FIG. 5. Therefore, in a process of obtaining the second sound intensity, the large-screen device may synchronously perform the step of determining the to-be-configured sound channel, thereby effectively improving sound channel configuration efficiency.

Further, optionally, the large-screen device may further display prompt information indicating that wireless sound box pairing is completed, thereby increasing interest of a sound channel configuration process in which the user participates, and further improving user experience.

In some other scenarios, compared with the foregoing dual-channel sound box system in which there is only one wireless sound box in each direction of corresponding directions on two sides of the central axis of the large-screen device, in a sound box system in which there are two or more wireless sound boxes in each direction of corresponding directions on two sides of the central axis of the large-screen device, because the microphones of the large-screen device are generally located at corresponding positions on the two sides of the central axis of the large-screen device or located at corresponding positions on the central axis, the large-screen device cannot directly determine the to-be-configured sound channel based on the first sound intensities collected by the microphones at one time, and needs to wait until collection of some or all of the first sound intensities is completed, so that the to-be-configured sound channel can be determined. The some of the first sound intensities include all first sound intensities corresponding to a one-side direction of the central axis of the large-screen device.

For example, the large-screen device is a four-channel surround device, that is, the large-screen device may output four-channel audio, and needs to establish the pairing relationship with four wireless sound boxes. However, the large-screen device is configured with only two microphones, and the large-screen device cannot distinguish between a left front sound channel and a left rear sound channel or distinguish between the right front sound channel and the right rear sound channel based on first sound intensities collected by the two microphones at one time. Therefore, the large-screen device can further confirm the to-be-configured sound channels only after obtaining all first sound intensities corresponding to the left side of the large-screen device, or all first sound intensities corresponding to the right side of the large-screen device, or all first sound intensities.

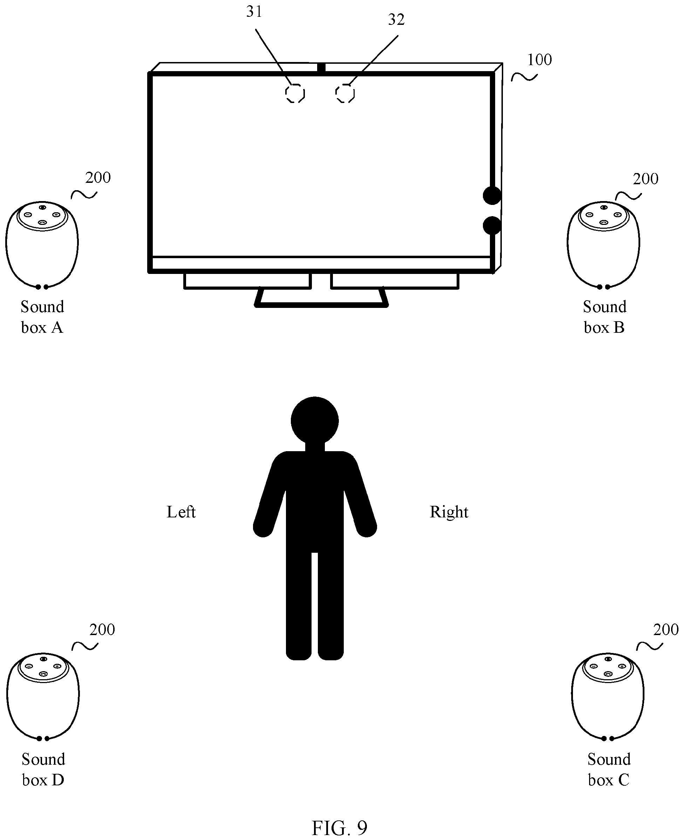

For example, as shown in FIG. 9, the large-screen device 100 is a four-channel surround device, and includes a left front sound channel, a left rear sound channel, a right front sound channel, and a right rear sound channel. Accordingly, a to-be-paired wireless sound box 200 includes a sound box A, a sound box B, a sound box C, and a sound box D. A relative position relationship between each wireless sound box and the large-screen device may be shown in FIG. 9. The sound box A is located at a position that is on a left side of the large-screen device 100 and that is close to the large-screen device 100, a sound box D is located at a position that is on the left side of the large-screen device 100 and that is far away from the large-screen device 100, a sound box B is located at a position that is on a right side of the large-screen device 100 and that is close to the large-screen device 100, and a sound box C is located at a position that is on the right side of the large-screen device 100 and that is far away from the large-screen device 100.

It is assumed that after a user taps the wireless sound box 200 by using a knuckle, the first sound intensity and the second sound intensity that are determined by the large-screen device 100 are shown in Table 2 below. It is assumed that the user first taps the sound box A in the scenario shown in FIG. 9 by using the knuckle. Corresponding to the method shown in FIG. 8, in step S803, the large-screen device 100 can only determine, based on the first sound intensities collected by the microphone 31 and the microphone 32 (the sound intensity received by the microphone 31 on the left side inside the large-screen device 100 is 100 dB, and is greater than a sound intensity 90 dB received by the microphone 32 on the right side inside the large-screen device 100), that the sound of tapping the wireless sound box 200 by the user by using the knuckle comes from the left side of the large-screen device 100. Therefore, the large-screen device 100 can only determine that a current to-be-configured sound channel is the left front sound channel or the left rear sound channel, but cannot further determine whether the to-be-configured sound channel is the left front sound channel or the left rear sound channel. In step S806, the large-screen device 100 determines, based on the second sound intensities (the sound intensity received by the sound box A, the sound box B, the sound box C, and the sound box D is 120 dB, 60 dB, 40 dB, and 60 dB respectively; or the sound intensity received by the sound box A is largest, which is 120 dB), that the to-be-paired wireless sound box is the sound box A. However, in this case, because the large-screen device 100 cannot further determine whether the to-be-configured sound channel is the left front sound channel or the left rear sound channel in step S803, the large-screen device 100 cannot determine whether the sound box A should be matched to the left front sound channel or the sound box A should be matched to the left rear sound channel, that is, the large-screen device 100 cannot determine the correspondence between the sound box A and the to-be-configured sound channel.

In other words, the method shown in FIG. 8 is not applicable to a scenario in which there are two or more wireless sound boxes in each direction of corresponding directions on two sides of the central axis of the large-screen device. Therefore, in this scenario, the large-screen device may determine the to-be-configured sound channel once after determining the first sound intensity of the sound each time, and can determine the to-be-configured sound channel after determining all first sound intensities of the one-side direction of the central axis of the large-screen device. It can be learned from this that, timing of determining the to-be-configured sound channel is related to a sequence of tapping the wireless sound box by the user.

**Table 2**

| Tapping position | First sound intensity | | Second sound intensity | | | |
|---|---|---|---|---|---|---|
| | Microphone 31 | Microphone 32 | Sound box A | Sound box B | Sound box C | Sound box D |
| Sound box A | 100 dB | 90 dB | 120 dB | 60 dB | 40 dB | 60 dB |
| Sound box B | 90 dB | 100 dB | 60 dB | 120 dB | 60 dB | 40 dB |
| Sound box C | 70 dB | 90 dB | 40 dB | 60 dB | 120 dB | 60 dB |
| Sound box D | 90 dB | 70 dB | 60 dB | 40 dB | 60 dB | 120 dB |

The following uses the four-channel surround sound box system shown in FIG. 9 and the content shown in Table 2 as an example to describe in detail the scenario in which there are two or more wireless sound boxes in each direction of the corresponding directions on the two sides of the central axis of the large-screen device.

Scenario 1: The user sequentially taps the wireless sound box located in one direction of the central axis of the large-screen device, and then sequentially taps the wireless sound box located in the other direction of the central axis of the large-screen device.

In some embodiments, the large-screen device can determine the to-be-configured sound channel only after obtaining first sound intensities corresponding to all the wireless sound boxes located in the one-side direction of the central axis of the large-screen device. Then, the large-screen device may first complete sound channel configuration on the determined to-be-configured sound channel based on the first sound intensities and the corresponding second sound intensities, and then continue to perform sound channel configuration on another sound channel.

For example, an example in which in the four-channel surround sound box system (that is, two wireless sound boxes are configured in the one-side direction of the central axis of the large-screen device) shown in FIG. 9, the user first taps the wireless sound box 200 on the left side of the large-screen device 100 is used for description. Both the sound box A and the sound box D are located on the left side of the large-screen device 100. As described above, after the user taps the sound box A by using the knuckle, the large-screen device 100 cannot determine, only based on the first sound intensity collected at one time, that the to-be-configured sound channel is the left front sound channel or the left rear sound channel. However, after the large-screen device 100 collects the first sound intensity generated after the user taps the sound box D by using the knuckle, as shown in Table 2, it can be determined that when the sound box D is tapped, the corresponding to-be-configured sound channel is also the left front sound channel or the left rear sound channel (that is, the sound intensity received by the microphone 31 located on the left side of the large-screen device 100 is 90 dB, which is greater than a sound intensity 70 dB received by the microphone 32 located on the right side of the large-screen device 100). In addition, in a process of detecting and determining the first sound intensity, the large-screen device 100 can further receive a second sound intensity sent by the wireless sound box 200, and a corresponding to-be-paired wireless sound box 200 can be determined based on the second sound intensity. For example, as shown in Table 2, the second sound intensity is horizontally compared. After the user taps the sound box A by using the knuckle, the second sound intensity corresponding to the sound box A is strongest in second sound intensities collected by the wireless sound box 200, and therefore it is determined that a to-be-paired device is the sound box A. After the user taps the sound box D by using the knuckle, the second sound intensity corresponding to the sound box D is strongest in the second sound intensities collected by the wireless sound box 200, and therefore it is determined that the to-be-paired device is the sound box D.

In other words, each time after detecting a tapping sound, the large-screen device 100 can determine a corresponding candidate target device (that is, the to-be-paired device) based on the second sound intensity. Therefore, a quantity of the to-be-paired devices is equal to a quantity of the tapping sounds made by the user by tapping the wireless sound box (as shown in FIG. 9, the quantity of the to-be-paired devices is 4, and the quantity of the tapping sounds is 4, including the tapping sound corresponding to the sound box A, the tapping sound corresponding to the sound box B, the tapping sound corresponding to the sound box C, and the tapping sound corresponding to the sound box D). It should be noted that, a corresponding tapping sound of the user on one wireless sound box is considered as one tapping sound. For example, in a process of configuring the sound box A, the user taps the sound box A for a plurality of times, and this process corresponds to one tapping sound to determine the quantity of the tapping sounds. The quantity of the tapping sounds is irrelevant to a quantity of tapping times of the user on one wireless sound box.

Then, as shown in Table 2, the first sound intensity corresponding to the sound box A tapped by the user by using the knuckle is vertically compared with the first sound intensity corresponding to the sound box D tapped by the user by using the knuckle, that is, the first sound intensity 100 dB that corresponds to the sound box A and that is collected by the microphone 31 is greater than the first sound intensity 90 dB that corresponds to the sound box D, and the first sound intensity 90 dB that corresponds to the sound box A and that is collected by the microphone 32 is greater than the first sound intensity 70 dB that corresponds to the sound box D. Therefore, it is determined that the sound box A is located at a position that is on the left side of the large-screen device 100 and that is close to the large-screen device 100 and a corresponding to-be-configured sound channel is the left front sound channel; and that a sound box D is located at a position that is on the left side of the large-screen device 100 and that is far away from the large-screen device 100, and a corresponding to-be-configured sound channel is the left rear sound channel. In this case, the left front sound channel may be configured for the sound box A, and the left rear sound channel may be configured for the sound box D, to complete sound channel configuration corresponding to the left side of the large-screen device.

Similarly, as shown in FIG. 9, after completing sound channel configuration corresponding to the left side, the large-screen device 100 may determine, based on the foregoing method, that the to-be-configured sound channel corresponding to the sound box B is the right front sound channel and the to-be-configured sound channel corresponding to the sound box C is the right rear sound channel, and complete sound channel configuration corresponding to the right side of the large-screen device 100, thereby completing configuration on all sound channels of the large-screen device 100. A method for configuring the sound channel corresponding to the right side of the large-screen device 100 is not described in detail.

It should be noted that, in a general situation, as shown in FIG. 9, when the user installs the four-channel surround sound box system at home (for example, in a living room), a device for playing the left front sound channel and a device for playing the right front sound channel (for example, a sound box A and a sound box B) are respectively installed at positions that are on the left side and the right side of the large-screen device 100 and that are close to the large-screen device 100, and a device for playing the left rear sound channel and a device for playing the right rear sound channel (for example, a sound box D and a sound box C) are respectively installed at positions that are on the left side and the right side (for example, a rear wall facing a television in the living room) of the large-screen device 100 and that are far away from the large-screen device 100. A placement manner of the four-channel surround sound box system conforms to a user habit (when the user watches a movie and listens to music, the user is usually located in the middle of the four wireless sound boxes, and the user faces the large-screen device 100, so the user expects that the wireless sound box located in the left front/right front/left rear/right rear of the user respectively plays audio of the left front/right front/left rear/right rear sound channel). This is also a common manner in this field (instead of playing the audio of the left rear/right rear sound channel by using the wireless sound box near the large-screen device 100 and playing the audio of the left front/right front sound channel by using the wireless sound box far away from the large-screen device 100, which does not conform to common sense and does not conform to the user habit). Therefore, the device configured to play the left front sound channel/right front sound channel is closer to the television large-screen device 100 than the device configured to play the left rear sound channel/right rear sound channel. Further, the first sound intensity corresponding to the sound box A tapped by the user by using the knuckle is vertically compared with the first sound intensity corresponding to the sound box D tapped by the user by using the knuckle, and it is determined that the sound box A corresponding to a larger first sound intensity is located at a position that is on the left side of the large-screen device 100 and that is close to the large-screen device 100, and corresponds to the left front sound channel. Correspondingly, in a process of determining the device of the right front/right rear sound channel, the large-screen device 100 may also configure, by comparing the first sound intensities, a wireless sound box corresponding to the larger first sound intensity with the right front sound channel.

It should be noted that, in this embodiment of this application, a tapping sequence in which the user sequentially taps the wireless sound boxes located in the one-side direction of the central axis of the large-screen device is not specifically limited. For example, in the sound channel configuration scenario of the four-channel surround sound box system shown in FIG. 9, the user may first tap the sound box A by using the knuckle, and then tap the sound box D; or the user may first tap the sound box D by using the knuckle, and then tap the sound box A.

Scenario 2: The user cross-taps the wireless sound boxes located on two sides of the central axis of the large-screen device.

In some embodiments, in this embodiment of this application, a sequence of tapping the wireless sound box 200 by the user is not limited. In this case, the user may start tapping the wireless sound box on the other side before tapping all wireless sound boxes in one-side direction of the central axis of the large-screen device is completed. Therefore, the large-screen device first determines a side, on the central axis of the large-screen device, on which the first sound intensities are all determined, and then preferentially performs sound channel configuration on the side.

For example, an example in which in the four-channel surround sound box system (that is, two wireless sound boxes are configured in the one-side direction of the central axis of the large-screen device) shown in FIG. 9, the user cross-taps the wireless sound boxes 200 on the left and right sides of the large-screen device 100 is used for description. For example, if a sequence of tapping the wireless sound boxes 200 by the user by using the knuckle is A-B-D-C, after the large-screen device 100 collects the first sound intensities for a third time (that is, obtains corresponding first sound intensities for three times after the user taps the sound box A, the sound box B, and the sound box D respectively), it is determined that all first sound intensities located on the left side of the large-screen device 100 have been obtained, and configuration on the left front sound channel and the left rear sound channel of the large-screen device 100 may be first performed. In other words, the left front sound channel may be first configured for the sound box A, and the left rear sound channel may be configured for the sound box D. Then, after collecting the first sound intensities for a fourth time, the large-screen device 100 configures the remaining right front sound channel and the right rear sound channel. For another example, if the sequence of tapping the wireless sound boxes 200 by the user by using the knuckle is A-B-C-D, the large-screen device 100 can determine the to-be-configured sound channel only after obtaining the first sound intensities for the fourth time. Then, the large-screen device 100 directly completes configuration on all four sound channels.

In some embodiments, in the foregoing scenario 1 and scenario 2, each time after determining the first sound intensity, the large-screen device needs to perform the step of determining the to-be-configured sound channel. However, in the scenario in which there are two or more wireless sound boxes in each direction of corresponding directions on the two sides of the central axis of the large-screen device, the large-screen device can determine the to-be-configured sound channel only after obtaining the first sound intensities at least twice. Therefore, in the foregoing scenario 1 and scenario 2, the large-screen device may first determine the quantity of the wireless sound boxes in each direction of the corresponding directions on the two sides of the central axis of the large-screen device, determine a minimum quantity of the wireless sound boxes in a direction on one side, and determine the minimum quantity as a preset threshold. Then, in the sound channel configuration process, after obtaining a quantity that is of the first sound intensity and that is equal to the preset threshold, the large-screen device starts to determine the to-be-configured sound channel, thereby reducing calculation power consumption of the large-screen device. For example, in the four-channel surround sound box system scenario shown in FIG. 9, if the large-screen device 100 determines that the minimum quantity of the wireless sound boxes 200 corresponding to one side is 2, after detecting the first sound intensities for the second time, the large-screen device starts to perform the step of determining the to-be-configured sound channel.

In some other embodiments, the large-screen device may further uniformly perform the step of determining the to-be-configured sound channel after obtaining all first sound intensities. For example, in the four-channel surround sound box system scenario shown in FIG. 9, after determining that all four first sound intensities are detected, the large-screen device 100 starts to perform the step of determining the to-be-configured sound channel.

In this way, after obtaining all the first sound intensities, the large-screen device determines the to-be-configured sound channel in a centralized manner, and performs sound channel configuration, so that accuracy of sound channel configuration can be improved.

It should be noted that, the foregoing correspondence between a moment for determining the to-be-configured sound channel and the sequence of tapping the wireless sound box by the user in the scenario in which there are two or more wireless sound boxes in each direction of the corresponding directions on the two sides of the central axis of the large-screen device is described merely as an example. If more than two microphones are configured in the large-screen device, or a microphone configuration position is different from the position shown in FIG. 9, or the microphone has a capability of determining an accurate position of the wireless sound box, in a scenario in which there are two or more wireless sound boxes in each direction of corresponding directions on the two sides of the central axis of the large-screen device, the large-screen device can also determine the to-be-configured sound channel based on the first sound intensity of a sound collected at one time by the microphone configured in the large-screen device. For example, in the scenario of the four-channel surround sound box system, after the user taps the wireless sound box on the left side of the large-screen device, the large-screen device may determine, based on a capability of the microphone configured in the large-screen device, that the first sound intensity of the tapping sound corresponds to the left front sound channel, and directly determine that the to-be-configured sound channel is the left front sound channel. In other words, in the scenario in which there are two or more wireless sound boxes in each direction of the corresponding directions on the two sides of the central axis of the large-screen device, the large-screen device can also complete sound channel configuration by using the method shown in FIG. 8.

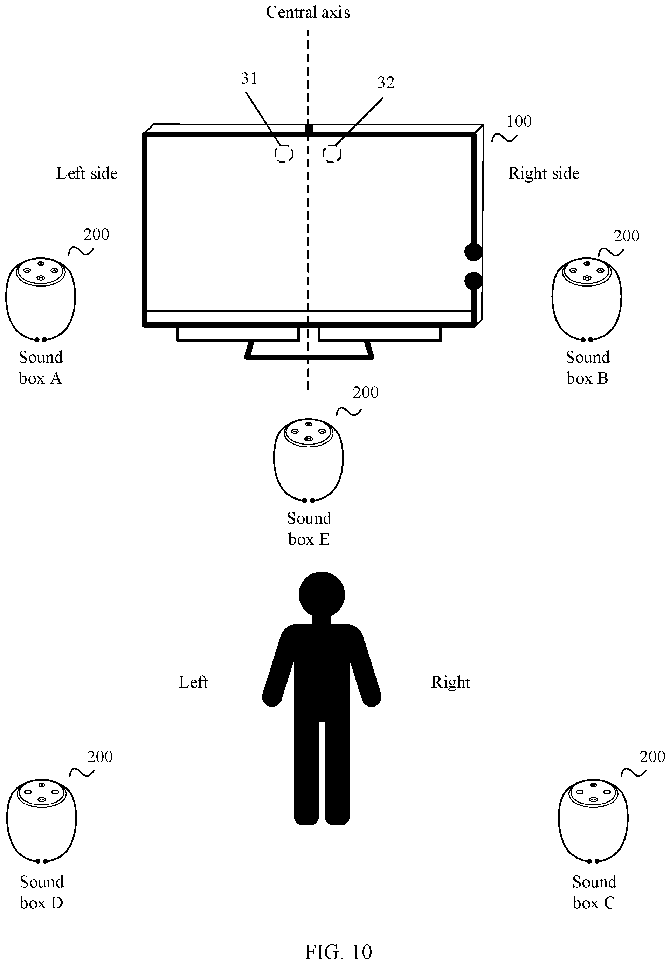

In some other scenarios, it is assumed that the large-screen device is configured with two microphones (for example, the microphone 31 and the microphone 32) shown in FIG. 3B. As shown in FIG. 10, compared with that in the four-channel surround sound box system shown in FIG. 9, the large-screen device includes five sound channels, a center sound box (for example, a sound box E) needs to be further configured to correspond to a center sound channel, and a placement position of the center sound box generally corresponds to a position of the central axis of the large-screen device. In the sound channel configuration process, if the user taps the sound box E by using the knuckle, and the first sound intensity collected by the microphone 31 of the large-screen device 100 is the same as the first sound intensity collected by the microphone 32, or a difference between the first sound intensity collected by the microphone 31 and the first sound intensity collected by the microphone 32 is less than a preset threshold, it is determined that the wireless sound box at the sound-emitting position corresponding to the tapping sound corresponds to the to-be-configured sound channel. Then, it is determined, based on the second sound intensity collected by the wireless sound box 200, that the wireless sound box to be paired with the center sound channel is the sound box E.

In this way, the sound channel configuration method provided in embodiments of this application can be applied to large-screen devices including different sound channel types, and sound channel configuration on the large-screen devices can be adaptively completed, thereby improving user experience.

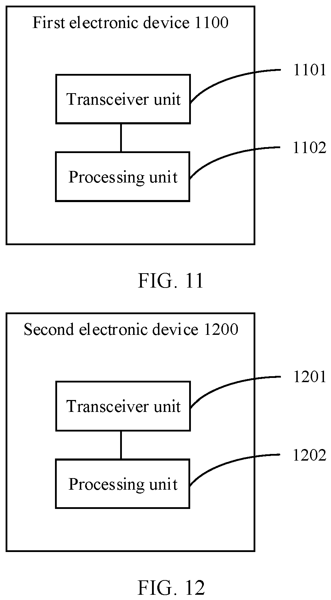

The foregoing describes, in detail with reference to FIG. 4 to FIG. 10, the sound channel configuration methods provided in embodiments of this application. The following describes, in detail with reference to FIG. 11, the sound channel configuration apparatus in embodiments of this application.

In a possible design, FIG. 11 is a schematic diagram of a structure of a first electronic device according to an embodiment of this application. As shown in FIG. 11, a first electronic device 1100 may include a transceiver unit 1101 and a processing unit 1102. The first electronic device 1100 may be configured to implement functions of the first electronic device (for example, the large-screen device) in the foregoing method embodiments.

Optionally, the transceiver unit 1101 is configured to support the first electronic device 1100 in performing steps S501, S502, S503, S505, and S508 in FIG. 5, and/or support the first electronic device 1100 in performing steps S801, S802, S803, S805, and S807 in FIG. 8.

Optionally, the processing unit 1102 is configured to support the first electronic device 1100 in performing steps S503, S506, S507, and S508 in FIG. 5, and/or support the first electronic device 1100 in performing steps S803, S806, and S807 in FIG. 8.

The transceiver unit 1101 may include a receiving unit and a sending unit, may be implemented by a transceiver or a transceiver-related circuit component, and may be a transceiver or a transceiver module. Operations and/or functions of the units in the first electronic device 1100 are respectively intended to implement corresponding procedures of the sound channel configuration method in the foregoing method embodiments. All related content of the steps in the foregoing method embodiments may be referenced to function descriptions of corresponding functional units. For brevity, details are not described herein again.

Optionally, the first electronic device 1100 shown in FIG. 11 may further include a storage unit (not shown in FIG. 11), and the storage unit stores a program or instructions. When the transceiver unit 1101 and the processing unit 1102 execute the program or the instructions, the first electronic device 1100 shown in FIG. 11 may perform the sound channel configuration methods in the foregoing method embodiments.

For technical effects of the first electronic device 1100 shown in FIG. 11, refer to the technical effects of the sound channel configuration methods in the foregoing method embodiments. Details are not described herein again.

In addition to a form of the first electronic device 1100, the technical solutions provided in embodiments of this application may also be a functional unit or a chip in the electronic device, or an apparatus used in a matching manner with the electronic device.

FIG. 12 is a schematic diagram of a structure of a second electronic device according to an embodiment of this application. As shown in FIG. 12, a second electronic device 1200 may include a transceiver unit 1201 and a processing unit 1202. The second electronic device 1200 may be configured to implement functions of the second electronic device (for example, the wireless sound box) in the foregoing method embodiments.

Optionally, the transceiver unit 1201 is configured to support the second electronic device 1200 in performing steps S502, S504, S505, and S508 in FIG. 5, and/or support the second electronic device 1200 in performing steps S802, S804, S805, and S807 in FIG. 8.

Optionally, the processing unit 1202 is configured to support the second electronic device 1200 in performing steps S504, and S508 in FIG. 5, and/or support the second electronic device 1200 in performing steps S804, and S807 in FIG. 8.

The transceiver unit 1201 may include a receiving unit and a sending unit, may be implemented by a transceiver or a transceiver-related circuit component, and may be a transceiver or a transceiver module. Operations and/or functions of the units in the second electronic device 1200 are respectively intended to implement corresponding procedures of the sound channel configuration method in the foregoing method embodiments. All related content of the steps in the foregoing method embodiments may be referenced to function descriptions of corresponding functional units. For brevity, details are not described herein again.

Optionally, the second electronic device 1200 shown in FIG. 12 may further include a storage unit (not shown in FIG. 12), and the storage unit stores a program or instructions. When the transceiver unit 1201 and the processing unit 1202 execute the program or the instructions, the second electronic device 1200 shown in FIG. 12 may perform the sound channel configuration methods in the foregoing method embodiments.

For technical effects of the second electronic device 1200 shown in FIG. 12, refer to the technical effects of the sound channel configuration methods in the foregoing method embodiments. Details are not described herein again.

In addition to a form of the second electronic device 1200, the technical solutions provided in embodiments of this application may also be a functional unit or a chip in the electronic device, or an apparatus used in a matching manner with the electronic device.

An embodiment of this application further provides a chip system, including a processor. The processor is coupled to a memory. The memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The method steps disclosed with reference to the embodiments of this application may be directly performed by a hardware processor, or may be performed by a combination of hardware and software modules in the processor.

An embodiment of this application further provides a computer-readable storage medium. The computer-readable storage medium stores a computer program. When the computer program runs on a computer, the computer is enabled to perform the foregoing related steps, to implement the sound channel configuration methods in the foregoing embodiments.

An embodiment of this application further provides a computer program product. When the computer program product runs on a computer, the computer is enabled to perform the foregoing related steps, to implement the sound channel configuration methods in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the sound channel configuration methods in the foregoing embodiments.

The apparatus, the computer-readable storage medium, the computer program product, or the chip provided in embodiments of this application are all configured to perform the corresponding methods provided above. Therefore, for beneficial effects that can be achieved, refer to beneficial effects in the corresponding methods provided above, and details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read only memory (erasable programmable ROM, EPROM), an electrically erasable programmable read only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The foregoing descriptions about implementations allow a person skilled in the art to clearly understand that, for the purpose of convenient and brief description, division of the foregoing functional modules is used as an example for description. In actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiment described above is merely an example. For example, the module or unit division is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the modules or units may be implemented in electronic, mechanical, or other forms.

In addition, function units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A sound channel configuration method, applied to a first electronic device, wherein the method comprises:
receiving a first operation of a user, wherein the first operation is used to trigger the first electronic device to perform sound channel configuration;
determining a first sound intensity of a first sound based on a sound collected by a first sound collection apparatus of the first electronic device;
determining, based on the first sound intensity, a target sound channel in to-be-configured sound channels of the first electronic device;
receiving at least one second sound intensity sent by one or more second electronic devices;
determining a target device in the second electronic devices based on the at least one second sound intensity; and
matching the target sound channel with the target device.

2. The method according to claim 1, wherein the determining a first sound intensity of a first sound based on a sound collected by a first sound collection apparatus of the first electronic device comprises:
if a sound feature of the sound collected by the first sound collection apparatus of the first electronic device meets a preset condition, determining that the collected sound is the first sound, and determining the first sound intensity of the first sound, wherein the sound feature comprises one or more of a frequency feature, an amplitude feature, a waveform feature, and a duration feature.

3. The method according to claim 1 or 2, wherein the to-be-configured sound channels of the first electronic device comprise a left sound channel and a right sound channel; and the determining, based on the first sound intensity, a target sound channel in to-be-configured sound channels of the first electronic device comprises:
if it is determined, based on the first sound intensity, that the first sound comes from a left side or a right side of the first electronic device, determining that the target sound channel is the left sound channel or the right sound channel; and
the determining a target device in the second electronic devices based on the at least one second sound intensity comprises:
determining, as the target device, a second electronic device corresponding to a larger second sound intensity in the at least one second sound intensity.

4. The method according to claim 1 or 2, wherein the to-be-configured sound channels of the first electronic device comprise a left front sound channel, a left rear sound channel, a right-sound-channel front sound channel, and a right rear sound channel; and there are a plurality of first sounds;
the determining, based on the first sound intensity, a target sound channel in to-be-configured sound channels of the first electronic device comprises:
if it is determined, based on the first sound intensity, that the first sound comes from a left side of the first electronic device, determining that the target sound channel is the left front sound channel or the left rear sound channel; or if it is determined, based on the first sound intensity, that the first sound comes from a right side of the first electronic device, determining that the target sound channel is the right-sound-channel front sound channel or the right rear sound channel; and
the determining a target device in the second electronic devices based on the at least one second sound intensity comprises:
determining, for each first sound, a second electronic device corresponding to a larger second sound intensity in second sound intensities corresponding to each first sound as a candidate target device, wherein a quantity of candidate target devices is equal to a quantity of the first sounds;
for first sound intensities corresponding to a same sound collection apparatus in first sound intensities that correspond to the first sounds from the left side of the first electronic device, determining a candidate target device corresponding to a larger first sound intensity as a target device corresponding to the left front sound channel, and determining a candidate target device corresponding to a smaller first sound intensity as a target device corresponding to the left rear sound channel; and
for first sound intensities corresponding to a same sound collection apparatus in first sound intensities that correspond to the first sounds from the right side of the first electronic device, determining a candidate target device corresponding to a larger first sound intensity as a target device corresponding to the right front sound channel, and determining a candidate target device corresponding to a smaller first sound intensity as a target device corresponding to the right rear sound channel.

5. The method according to any one of claims 1 to 4, wherein a sound-emitting position of the first sound comprises a first position of the target device or a second position near the target device.

6. The method according to any one of claims 1 to 5, wherein after the receiving a first operation of a user, the method further comprises:
obtaining a first Bluetooth name of the second electronic device; and
the receiving at least one second sound intensity sent by one or more second electronic devices comprises:
obtaining a second Bluetooth name of the second electronic device; and
determining the at least one second sound intensity based on a newly-added suffix of the second Bluetooth name compared with the first Bluetooth name.

7. The method according to any one of claims 1 to 5, wherein the receiving at least one second sound intensity sent by one or more second electronic devices comprises:
obtaining second Bluetooth names of the one or more second electronic devices, wherein the second Bluetooth names comprise at least one piece of second sound intensity information, and the at least one piece of second sound intensity information indicates the at least one second sound intensity; and
determining the at least one second sound intensity based on the second Bluetooth names.

8. The method according to any one of claims 1 to 7, wherein
the first sound is generated by a second operation of the user, and the second operation comprises one or more of the following content: an operation of tapping the target device by using a knuckle of the user, and an operation of making a sound by the user at or near the target device; or
the first sound is generated by the target device by playing audio.

9. The method according to claim 8, wherein if the first sound is generated by the second operation of the user, the method further comprises:
prompting the user to perform the second operation.

10. The method according to any one of claims 1 to 9, wherein the method further comprises:
prompting the user that the sound channel configuration is completed.

11. A sound channel configuration method, applied to a second electronic device, wherein the method comprises:
determining a second sound intensity of a first sound based on a sound collected by a second sound collection apparatus of the second electronic device;
sending the second sound intensity to a first electronic device;
receiving an audio file sent by the first electronic device, wherein the audio file is sent by the first electronic device after the first electronic device determines, based on a first sound intensity and the second sound intensity, a target sound channel that matches the second electronic device, the audio file corresponds to the target sound channel, the first sound intensity is a sound intensity that is of the first sound and that is determined by the first electronic device, and the target sound channel is a sound channel in to-be-configured sound channels of the first electronic device; and
playing audio corresponding to the audio file.

12. The method according to claim 11, wherein the determining a second sound intensity of a first sound based on a sound collected by a second sound collection apparatus of the second electronic device comprises:
if a sound feature of the sound collected based on the second sound collection apparatus of the second electronic device meets a preset condition, determining that the collected sound is the first sound, and determining the second sound intensity of the first sound, wherein the sound feature comprises one or more of a frequency feature, an amplitude feature, a waveform feature, and a duration feature.

13. The method according to claim 11 or 12, wherein before the sending the second sound intensity to a first electronic device, the method further comprises:
sending a first Bluetooth name of the second electronic device to the first electronic device; and
the sending the second sound intensity to a first electronic device comprises:
sending a second Bluetooth name of the second electronic device to the first electronic device, wherein the second Bluetooth name is a Bluetooth name obtained after the first Bluetooth name is edited based on the second sound intensity.

14. The method according to claim 11 or 12, wherein the sending the second sound intensity to a first electronic device comprises:
sending a second Bluetooth name comprising second sound intensity information to the first electronic device, wherein the second sound intensity information indicates the second sound intensity.

15. The method according to any one of claims 11 to 14, wherein
the first sound is generated by a second operation of a user, and the second operation comprises one or more of the following content: an operation of tapping the second electronic device by using a knuckle of the user, and an operation of making a sound by the user at or near the second electronic device; or
the first sound is generated by the second electronic device by playing audio.

16. A sound channel configuration system, wherein the system comprises a first electronic device and one or more second electronic devices, wherein
the first electronic device is configured to: receive a first operation of a user; determine a first sound intensity of a first sound based on a sound collected by a first sound collection apparatus of the first electronic device; and determine, based on the first sound intensity, a target sound channel in to-be-configured sound channels of the first electronic device, wherein the first operation is used to trigger the first electronic device to perform sound channel configuration;
the second electronic device is configured to: determine a second sound intensity of the first sound based on a sound collected by a second sound collection apparatus of the second electronic device; and send the second sound intensity to the first electronic device; and
the first electronic device is further configured to: receive at least one second sound intensity sent by the one or more second electronic devices; determine a target device in the one or more second electronic devices based on the at least one second sound intensity; and match the target sound channel with the target device.

17. The system according to claim 16, wherein
the first electronic device is specifically configured to: if a sound feature of the sound collected by the first sound collection apparatus of the first electronic device meets a preset condition, determine that the collected sound is the first sound, and determine the first sound intensity of the first sound, wherein the sound feature comprises one or more of a frequency feature, an amplitude feature, a waveform feature, and a duration feature.

18. The system according to claim 16 or 17, wherein
the second electronic device is specifically configured to: if a sound feature of the sound collected based on the second sound collection apparatus of the second electronic device meets the preset condition, determine that the collected sound is the first sound, and determine the second sound intensity of the first sound, wherein the sound feature comprises one or more of a frequency feature, an amplitude feature, a waveform feature, and a duration feature.

19. The system according to any one of claims 16 to 18, wherein the to-be-configured sound channels of the first electronic device comprise a left sound channel and a right sound channel; and the first electronic device is specifically configured to:
if it is determined, based on the first sound intensity, that the first sound comes from a left side or a right side of the first electronic device, determine that the target sound channel is the left sound channel or the right sound channel; and
determine, as the target device, a second electronic device corresponding to a larger second sound intensity in the at least one second sound intensity.

20. The system according to any one of claims 16 to 18, wherein the to-be-configured sound channels of the first electronic device comprise a left front sound channel, a left rear sound channel, a right-sound-channel front sound channel, and a right rear sound channel; and there are a plurality of first sounds; and
the first electronic device is specifically configured to:
if it is determined, based on the first sound intensity, that the first sound comes from a left side of the first electronic device, determine that the target sound channel is the left front sound channel or the left rear sound channel; or if it is determined, based on the first sound intensity, that the first sound comes from a right side of the first electronic device, determine that the target sound channel is the right-sound-channel front sound channel or the right rear sound channel;
determine, for each first sound, a second electronic device corresponding to a larger second sound intensity in second sound intensities corresponding to each first sound as a candidate target device, wherein a quantity of candidate target devices is equal to a quantity of the first sounds;
for first sound intensities corresponding to a same sound collection apparatus in first sound intensities that correspond to the first sounds from the left side of the first electronic device, determine a candidate target device corresponding to a larger first sound intensity as a target device corresponding to the left front sound channel, and determine a candidate target device corresponding to a smaller first sound intensity as a target device corresponding to the left rear sound channel; and
for first sound intensities corresponding to a same sound collection apparatus in first sound intensities that correspond to the first sounds from the right side of the first electronic device, determine a candidate target device corresponding to a larger first sound intensity as a target device corresponding to the right front sound channel, and determine a candidate target device corresponding to a smaller first sound intensity as a target device corresponding to the right rear sound channel.

21. The system according to any one of claims 16 to 20, wherein a sound-emitting position of the first sound comprises a first position of the target device or a second position near the target device.

22. The system according to any one of claims 16 to 21, wherein
the first electronic device is further configured to obtain a first Bluetooth name of the second electronic device; and
the first electronic device is specifically configured to: obtain a second Bluetooth name; and determine the at least one second sound intensity based on a newly-added suffix of the second Bluetooth name compared with the first Bluetooth name.

23. The system according to any one of claims 16 to 22, wherein
the first electronic device is specifically configured to: obtain second Bluetooth names of the one or more second electronic devices, wherein the second Bluetooth names comprise at least one piece of second sound intensity information, and the at least one piece of second sound intensity information indicates the at least one second sound intensity; and determine the at least one second sound intensity based on the second Bluetooth names.

24. The system according to any one of claims 16 to 23, wherein
the first sound is generated by a second operation of the user, and the second operation comprises one or more of the following content: an operation of tapping the target device by using a knuckle of the user, and an operation of making a sound by the user at or near the target device; or
the first sound is generated by the target device by playing audio.

25. The system according to claim 24, wherein if the first sound is generated by the second operation of the user, the first electronic device is further configured to prompt the user to perform the second operation.

26. The system according to any one of claims 16 to 25, wherein
the first electronic device is further configured to prompt the user that the sound channel configuration is completed.

27. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the sound channel configuration method according to any one of claims 1 to 10, or the electronic device is enabled to perform the sound channel configuration method according to any one of claims 11 to 15.

28. A computer-readable storage medium, wherein the computer-readable storage medium comprises a computer program, and when the computer program runs on an electronic device, the electronic device is enabled to perform the method according to any one of claims 1 to 10, or the electronic device is enabled to perform the method according to any one of claims 11 to 15.

29. A computer program product, wherein when the computer program product runs on an electronic device, the electronic device is enabled to perform the method according to any one of claims 1 to 10, or the electronic device is enabled to perform the method according to any one of claims 11 to 15.

30. A chip apparatus, wherein the chip apparatus comprises at least one processor and at least one interface circuit, the at least one interface circuit is configured to perform a transceiver function, and send instructions to the at least one processor, and when the at least one processor executes the instructions, the at least one processor performs the method according to any one of claims 1 to 10, or the electronic device is enabled to perform the method according to any one of claims 11 to 15.
